# EUROPEAN PATENT APPLICATION

(11) **EP 4 012 816 A1**
(43) Date of publication of application: **15.06.2022**
(21) Application number: 20850709.5
(22) Date of filing: 05.08.2020
(51) Int. Cl.: H01M 10/0585, B05C 5/00, B05C 9/12, B05D 1/32, B05D 5/12, H01M 4/139, H01M 4/36

(54) **METHOD FOR MANUFACTURING LITHIUM ION CELL**

(30) Priority: 06.08.2019 JP 2019144647; 11.09.2019 JP 2019165452; 19.11.2019 JP 2019208925
(71) Applicant: APB Corporation, Tokyo 101-0041 (JP)
(72) Inventor: NAKASHIMA, Yusuke, Kyoto-shi, Kyoto 605-0995 (JP); KUSANO, Ryosuke, Kyoto-shi, Kyoto 605-0995 (JP); YOKOYAMA, Yuichiro, Kyoto-shi, Kyoto 605-0995 (JP); NEKOHASHI, Yuki, Kyoto-shi, Kyoto 605-0995 (JP); ENOKI, Kenichiro, Kyoto-shi, Kyoto 605-0995 (JP); TANAKA, Yuya, Kyoto-shi, Kyoto 605-0995 (JP); HORIE, Hideaki, Tokyo 101-0041 (JP)
(74) Representative: Hoefer & Partner Patentanwälte mbB
(86) International application number: PCT/JP2020/030061
(87) International publication number: WO 2021/025072

(57) **Abstract**

The present invention relates to a method of manufacturing a lithium ion battery having a set of a positive electrode current collector, a positive electrode active material layer, a separator, a negative electrode active material layer, and a negative electrode current collector laminated in this order, and having a configuration in which outer peripheries of the positive electrode active material layer and the negative electrode active material layer are sealed with a sealing material and an electrolytic solution is enclosed, the method including: a step of manufacturing a positive electrode and/or a negative electrode by an electrode manufacturing step including a supply step of preparing a frame-shaped sealing material and a bottom member, and supplying an electrode active material composition containing electrode active material particles and an electrolytic solution to a space surrounded by the sealing material and the bottom member, and a compression step of compressing the electrode active material composition to form an electrode active material layer.

## Description

### Technical Field

The present invention relates to a method of manufacturing a lithium ion battery.

### Background Art

In recent years, there has been an urgent need to reduce carbon dioxide emissions in order to protect the environment. In the automobile industry, there have been high expectations for the reduction in carbon dioxide emissions through the introduction of electric vehicles (EVs) and hybrid electric vehicles (HEVs), and the development of secondary cells for motor drive, which serves as a key to practical use of these vehicles, has been being conducted intensively. As the secondary batteries, attention has been paid to lithium ion batteries, which are capable of achieving high energy density and high power density.

As such a lithium ion battery, PTL 1 discloses a secondary battery in which an electrode having an active material layer formed on a resin current collector and an electrolyte layer arranged between the electrodes are laminated, the secondary battery includes a sealing portion that is arranged on the outer peripheral portion of the electrolyte layer and liquid-tightly seals a space between the resin current collectors adjacent to each other in the lamination direction, and the sealing portion has a film layer including a heat-fusible material and a reinforcing member arranged so as to be in surface contact with the film layer.

In addition, PTL 2 discloses a method of manufacturing an electrode including laminating a positive electrode fixed to a first frame jig and containing an electrolytic solution, and a negative electrode fixed to a second frame jig and containing the electrolytic solution via a separator, and in a state in which the positive electrode and the negative electrode are pressurized and pressed to each other, the fixing of the positive electrode to the first frame jig or the fixing of the negative electrode to the second frame jig is released.

### Citation List

### Patent Literature

[PTL 1] Japanese Laid-open Patent Publication No. 2017-16825
[PTL 2] Japanese Laid-open Patent Publication No. 2019-040821

### Summary of Invention

### Technical Problem

In the secondary battery described in PTL 1, it is difficult to arrange the sealing portion that liquid-tightly seals a space between the resin current collectors not to overlap an electrode active material layer, and there is a problem that the manufacturing speed of the secondary battery may decrease.

In addition, in the method of manufacturing an electrode described in PTL 2, although a method of manufacturing a laminate having a sealing portion that seals the peripheral portions of a positive electrode layer and a negative electrode layer, it cannot be said that the manufacturing speed is sufficient and there is room for improvement.

The present invention has been made in view of the above problems, and an object of the present invention is to provide a method of manufacturing a lithium ion battery having a configuration in which an outer periphery of an electrode active material layer is sealed with a sealing material and an electrolytic solution is enclosed, the method capable of improving the manufacturing speed of the lithium ion battery.

### Solution to Problem

The present invention relates to a method of manufacturing a lithium ion battery having a set of a positive electrode current collector, a positive electrode active material layer, a separator, a negative electrode active material layer, and a negative electrode current collector laminated in this order, and having a configuration in which outer peripheries of the positive electrode active material layer and the negative electrode active material layer are sealed with a sealing material and an electrolytic solution is enclosed, the method including: a step of manufacturing a positive electrode and/or a negative electrode by an electrode manufacturing step including a supply step of preparing a frame-shaped sealing material and a bottom member, and supplying an electrode active material composition containing electrode active material particles and an electrolytic solution to a space surrounded by the sealing material and the bottom member, and a compression step of compressing the electrode active material composition to form an electrode active material layer.

### Advantageous Effects of Invention

The method of manufacturing a lithium ion battery of the present invention is capable of improving the manufacturing speed of a lithium ion battery having a set of a positive electrode current collector, a positive electrode active material layer, a separator, a negative electrode active material layer, and a negative electrode current collector laminated in this order, and having a configuration in which outer peripheries of the positive electrode active material layer and the negative electrode active material layer are sealed with a sealing material and an electrolytic solution is enclosed.

### Brief Description of Drawings

FIG. 1 is a perspective view schematically showing an example of a supply step constituting a method of manufacturing a lithium ion battery of the present invention.
FIG. 2 is a perspective view schematically showing an example of a compression step constituting the method of manufacturing a lithium ion battery of the present invention.
FIG. 3 is a perspective view schematically showing an example of a recovery step as a preferable aspect of the method of manufacturing a lithium ion battery of the present invention.
FIG. 4 is a cross-sectional view schematically showing an example of a combination step constituting the method of manufacturing a lithium ion battery of the present invention.
FIG. 5 is a cross-sectional view schematically showing an example of a lithium ion battery manufactured by the method of manufacturing a lithium ion battery of the present invention.
FIG. 6 is a perspective view schematically showing an example of an electrode material for a lithium ion battery manufactured by the method of manufacturing an electrode material for a lithium ion battery.
FIG. 7 is a cross-sectional view schematically showing an example of the supply step.
FIG. 8 is a cross-sectional view schematically showing another example of the supply step.
FIG. 9A is a perspective view schematically showing an example of the supply step, and FIG. 9B is a perspective view schematically showing an example of a removal step.
FIGS. 10A, 10B and 10C are perspective views schematically showing another example of the removal step.
FIGS. 11A, 11B and 11C are perspective views schematically showing still another example of the removal step.
FIGS. 12A and 12B are perspective views schematically showing still another example of the removal step.
FIG. 13 is a cross-sectional view schematically showing an example of a pressurization step.
FIG. 14 is a cross-sectional view schematically showing an example of an aspect of manufacturing an electrode material for a lithium ion battery using an apparatus for manufacturing an electrode material for a lithium ion battery.
FIG. 15 is a cross-sectional view schematically showing another example of the aspect of manufacturing an electrode material for a lithium ion battery using the apparatus for manufacturing an electrode material for a lithium ion battery.

### Description of Embodiments

Hereinafter, a method of manufacturing a lithium ion battery of the present invention will be described.

In the present specification, when referring to the lithium ion battery, the concept includes a lithium ion secondary battery.

A method of manufacturing a lithium ion battery of the present invention is a method of manufacturing a lithium ion battery having a set of a positive electrode current collector, a positive electrode active material layer, a separator, a negative electrode active material layer, and a negative electrode current collector laminated in this order, and having a configuration in which outer peripheries of the positive electrode active material layer and the negative electrode active material layer are sealed with a sealing material and an electrolytic solution is enclosed, the method including: a step of manufacturing a positive electrode and/or a negative electrode by an electrode manufacturing step including a supply step of preparing a frame-shaped sealing material and a bottom member, and supplying an electrode active material composition containing electrode active material particles and an electrolytic solution to a space surrounded by the sealing material and the bottom member, and a compression step of compressing the electrode active material composition to form an electrode active material layer.

In the method of manufacturing a lithium ion battery of the present invention, since the electrode active material composition containing electrode active material particles and an electrolytic solution is supplied to the space surrounded by the frame-shaped sealing material and the bottom member and the electrode active material composition is compressed to obtain an electrode active material layer, a structure in which the sealing material and the electrode active material layer are integrated can be formed.

Therefore, as compared with the case where the sealing material and the electrode active material layer are separately prepared, the step of sealing the outer periphery of the electrode active material layer with a sealing material can be easily performed, and thus the manufacturing speed can be improved.

In addition, since the structure in which the sealing material and the electrode active material layer are integrated can be formed, a problem that the sealing material and the electrode active material layer overlap with each other when the lithium ion battery is combined does not arise.

### <Electrode Manufacturing Step>

The method of manufacturing a lithium ion battery of the present invention includes an electrode manufacturing step including a supply step and a compression step.

First, the supply step constituting the method of manufacturing a lithium ion battery of the present invention will be described.

### [Supply Step]

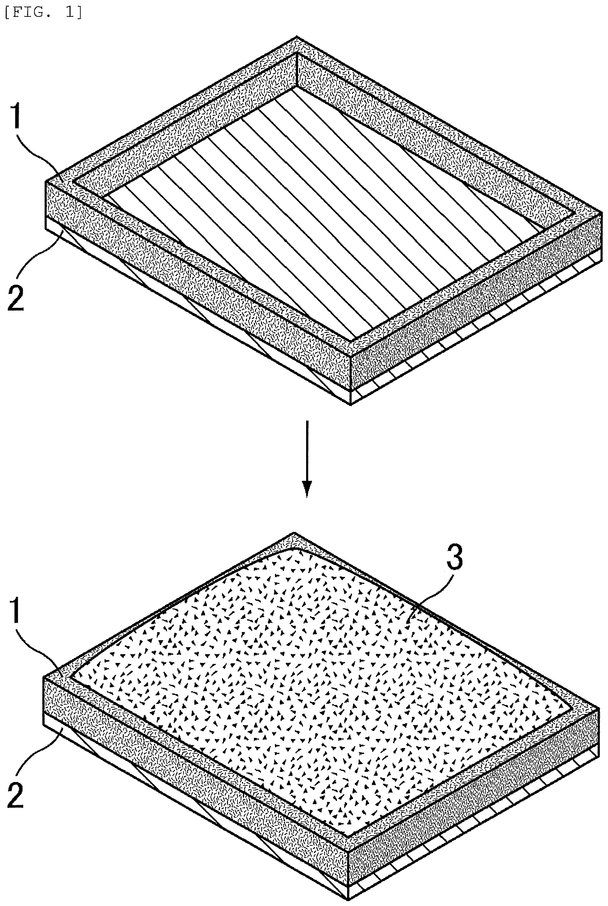

An example of the supply step constituting the method of manufacturing a lithium ion battery of the present invention will be described with reference to FIG. 1.

FIG. 1 is a perspective view schematically showing an example of a supply step constituting a method of manufacturing a lithium ion battery of the present invention.

As shown in FIG. 1, in the supply step, a frame-shaped sealing material 1 and a bottom member 2 are prepared, and an electrode active material composition 3 containing electrode active material particles and an electrolytic solution is supplied to a space surrounded by the frame-shaped sealing material 1 and the bottom member 2.

The method of supplying the electrode active material composition 3 is not particularly limited, and known coating methods such as a spray coater method, a flow coater method, a die coater method, a roll coater method, a blade coater method, a rod coater method, or a bar coater method can be used.

The amount of the electrode active material composition 3 to be supplied is not particularly limited, and the amount that becomes the thickness of the positive electrode active material layer or the negative electrode active material layer, which will be described later, may be supplied.

Subsequently, the sealing material 1, the bottom member 2, and the electrode active material composition 3 used in the supply step will be described.

### [Sealing Material]

The sealing material 1 is not particularly limited and any material may be used as long as the material is durable to an electrolytic solution. A polymer material is preferable, and a thermosetting polymer material is more preferable.

Examples of the thermosetting polymer material include an epoxy-based resin, a polyolefin-based resin, a polyurethane-based resin, and a polyvinylidene fluoride resin, and an epoxy-based resin is preferable due to high durability and easy handling.

Further, as the sealing material 1, a double-sided tape-shaped sealing member (a sealing member formed by applying the above-mentioned thermosetting polymer material or the like to both sides of a flat base material) can be suitably used. For example, a known material such as a sealing film having a three-layer structure (such as a film in which a modified polypropylene film is laminated on and below a polyethylene naphthalate film) or the like can be used.

The shape of the sealing material 1 is not particularly limited and examples thereof include a polygon such as a triangle, a quadrangle, and a pentagon, a circle, an ellipse, and the like, and a quadrangle is preferable.

The size, height, and thickness of the sealing material 1 are not particularly limited, and may be appropriately set according to the lithium ion battery to be manufactured.

As for the size of the sealing material 1, for example, in the case of a quadrangle, the length of one piece is preferably 30 to 2000 mm, and more preferably 70 to 1000 mm.

The height of the sealing material 1 is about the same as the height of an electrode active material layer 4 described later, and is, for example, preferably 150 to 1500 mm, and more preferably 250 to 1000 mm. The height of the sealing material may be higher than the height of an electrode active material layer 4, and the height may be adjusted by appropriately cutting the sealing material or the like after the electrode active material layer 4 is formed.

In addition, the thickness of the sealing material 1 is preferably, for example, 5 to 20 mm, and more preferably 10 to 20 mm, from the viewpoint of imparting sufficient strength to the sealing material 1.

Examples of a method of obtaining the frame-shaped sealing material 1 include a method of performing a punching step of performing a predetermined punching process on a sheet-shaped thermosetting polymer material.

The punching step may or may not be performed continuously with the supply step, the compression step, and the combination step.

A mask material may be arranged on the surface of the sealing material 1.

In this case, it is preferable to have a recovery step of recovering the mask material after the supply step and the compression step described later.

During the supply step and the compression step described later, the electrode active material composition 3 may be spilled out of the frame of the sealing material 1, but in the recovery step, the electrode active material composition 3 spilled out of the frame (on the mask material) of the sealing material 1 can be recovered while recovering the mask material.

The recovery step will be described later.

The mask material is not particularly limited, and a known material such as a metal mask material or a resin film mask material can be used.

### [Bottom member]

The bottom member 2 may be a release material or an electrode current collector, but the bottom member 2 is preferably an electrode current collector.

In the case where the bottom member 2 is a release material, a transfer step of transferring the electrode active material layer from the bottom member 2 to the electrode current collector is required. However, in the case where the bottom member 2 is an electrode current collector, the above-described transfer step can be omitted, and thus the manufacturing speed can be further improved.

The electrode current collector may be a positive electrode current collector or a negative electrode current collector.

A positive electrode current collector, a negative electrode current collector, and a release material that can be used as the bottom member 2 will be described.

### (Positive Electrode Current Collector)

First, the positive electrode current collector will be described.

As the positive electrode current collector, a current collector used in a known lithium ion battery can be used, and for example, a known metal current collector and a resin current collector formed of a conductive material and a resin (a resin current collector disclosed in Japanese Laid-open Patent Publication No. 2012-150905, Pamphlet of International Publication No. WO 2015-005116, or the like) can be used.

The positive electrode current collector is preferably a resin current collector from the viewpoint of battery characteristics and the like.

As the metal current collector, for example, one or more metal materials selected from the group consisting of copper, aluminum, titanium, nickel, tantalum, niobium, hafnium, zirconium, zinc, tungsten, bismuth, antimony, and alloys including one or more of these metals, and alloys of stainless steel can be used. These metal materials may be used in the form of a thin plate, a metal foil, or the like. In addition, a metal current collector may be used in which the metal material is formed on the surface of a base material formed of a material other than the metal material by a method such as sputtering, electrodeposition, or coating.

The resin current collector preferably contains a conductive filler and a matrix resin.

Examples of the matrix resin include polyethylene (PE), polypropylene (PP), polymethylpentene (PMP), polycycloolefin (PCO), polyethylene terephthalate (PET), polyether nitrile (PEN), polytetrafluoroethylene (PTFE), styrene-butadiene rubber (SBR), polyacrylonitrile (PAN), polymethyl acrylate (PMA), polymethyl methacrylate (PMMA), polyvinylidene fluoride (PVdF), epoxy resin, silicone resin, and mixtures thereof.

From the viewpoint of electrical stability, polyethylene (PE), polypropylene (PP), polymethylpentene (PMP), and polycycloolefin (PCO) are preferable, and polyethylene (PE), polypropylene (PP), and polymethylpentene (PMP) are more preferable.

The conductive filler is selected from materials having conductivity.

Specific examples of the materials include metals [such as nickel, aluminum, stainless steel (SUS), silver, copper, and titanium], carbon [such as graphite and carbon black (such as acetylene black, ketjen black, furnace black, channel black, and thermal lamp black)], and mixtures thereof, but the material is not limited thereto.

These conductive fillers may be used alone or in combination of two or more thereof. In addition, alloys or metal oxides of these may also be used. From the viewpoint of electrical stability, aluminum, stainless steel, carbon, silver, copper, titanium, and mixtures thereof are preferable, silver, aluminum, stainless steel, and carbon are more preferable, and carbon is even more preferable. Further, these conductive fillers may also be one obtained by applying a conductive material (a metal material among the above-described conductive filler materials) around a particle-based ceramic material or a resin material by plating or the like.

The average particle diameter of the conductive filler is not particularly limited, but from the viewpoint of electric properties of the battery, the average particle diameter is preferably 0.01 to 10 µm, more preferably 0.02 to 5 µm, and even more preferably 0.03 to 1 µm. Incidentally, in the present specification, the term "particle diameter" means the largest distance L between any two points on a contour line of the particle. For the value of the "average particle diameter," a value is employed which is calculated using observation means, such as a scanning electron microscope (SEM) or a transmission electron microscope (TEM), as an average value of particle diameters of the particles observed in several to several tens of view fields.

The shape (form) of the conductive filler is not limited to the particle form, but may be a form other than the particle form, and may be a form that has been put to practical use as what is called a filler-based conductive material, such as carbon nanotubes.

The conductive filler may be a conductive fiber having a fibrous shape.

Examples of the conductive fiber include carbon fibers such as PAN-based carbon fibers, and pitch-based carbon fibers, a conductive fiber formed by uniformly dispersing a highly conductive metal or graphite in a synthetic fiber, a metal fiber formed by fiberizing a metal such as stainless steel, a conductive fiber formed by coating a surface of an organic fiber with a metal, and a conductive fiber formed by coating a surface of an organic fiber with a resin containing a conductive substance. Among these conductive fibers, carbon fibers are preferable. In addition, a polypropylene resin kneaded with graphene is also preferable.

In the case where the conductive filler is a conductive fiber, the average fiber diameter thereof is preferably 0.1 to 20 µm.

The weight ratio of the conductive filler in the resin current collector is preferably 5% to 90% by weight, and more preferably 20% to 80% by weight.

In particular, in the case where the conductive filler is carbon, the weight ratio of the conductive filler is preferably 20% to 30% by weight.

In addition to the matrix resin and the conductive filler, the resin current collector may contain other components (a dispersant, a cross-linking accelerating agent, a cross-linking agent, a coloring agent, an ultraviolet absorbent, a plasticizer, and the like). Further, a plurality of resin current collectors may be laminated and used, or a resin current collector and a metal foil may be laminated and used.

The size (area) of the positive electrode current collector may be appropriately set according to the lithium ion battery to be manufactured, but is preferably about the same as the size of the frame-shaped sealing material 1 described above.

The thickness of the positive electrode current collector is not particularly limited, and is preferably 5 to 150 µm. In the case where a plurality of resin current collectors are laminated and used as a positive electrode current collector, the total thickness after the lamination is preferably 5 to 150 µm.

The positive electrode current collector can be obtained, for example, by forming a conductive resin composition obtained by melt-kneading a matrix resin, a conductive filler and, if necessary, a dispersant for a filler into a film by a known method.

As a method of molding the conductive resin composition into a film form, for example, known film molding methods such as a T-die method, an inflation method, and a calendering method can be adopted. Incidentally, the positive electrode current collector can also be obtained by a molding method other than the film molding.

### (Negative Electrode Current Collector)

The negative electrode current collector will be described.

As the negative electrode current collector, one having the same configuration as that described for the positive electrode current collector can be appropriately selected and used, and can be obtained by the same method.

The negative electrode current collector is preferably a resin current collector from the viewpoint of battery characteristics and the like.

The size (area) of the negative electrode current collector may be appropriately set according to the lithium ion battery to be manufactured, but is preferably about the same as the size of the frame-shaped sealing material 1 described above.

The thickness of the negative electrode current collector is not particularly limited, and is preferably 5 to 150 µm.

### (Release Material)

The release material will be described.

The release material is not particularly limited, and a known release paper, release film, metal foil, or the like can be appropriately selected and used.

Specific examples thereof include release paper using glassine paper, kraft paper, clay coated paper, and the like as a base material, release films of non-fluororesins such as polyethylene terephthalate (PET), polyethylene, polypropylene, and polyimide, and fluororesins such as PTFE, ETFE, ethylene-hexafluoropropylene copolymer, PFA, and PVdF, and the like, and metal foils such as a copper foil and aluminum foil.

The size (area) of the release material may be appropriately set according to the lithium ion battery to be manufactured, but is preferably about the same as the size of the frame-shaped sealing material 1 described above.

The thickness of the release material is not particularly limited, and is preferably 5 to 150 µm.

### [Electrode Active Material Composition]

Subsequently, the materials constituting the electrode active material composition 3 will be described.

The electrode active material composition 3 may be a positive electrode active material composition or a negative electrode active material composition.

First, the case where the electrode active material composition 3 is a positive electrode active material composition will be described.

### [Positive Electrode Active Material Composition]

The positive electrode active material composition contains positive electrode active material particles and an electrolytic solution.

### (Positive Electrode Active Material Particle)

Examples of the positive electrode active material particles include particles of composite oxides of lithium and transition metals {composite oxides with one transition metal (such as LiCoO₂, LiNiO₂, LiAlMnO₄, LiMnO₂, and LiMn₂O₄), composite oxides with two transition metal elements (for example, LiFeMnO₄, LiNi₁₋ₓCoₓO₂, LiM_{1-y}Co_{y}O₂, LiNi_{1/3}Co_{1/3}Al_{1/3}O₂, and LiNi_{0.8}CO_{0.15}Al_{0.05}O₂), and composite oxides with three or more metal elements [for example, LiMₐM'_{b}M"_{c}O₂ (where M, M', and M" are different transition metal elements and a + b + c = 1 is satisfied, for example, LiNi_{1/3}Mn_{1/3}Co_{1/3}O₂) ] }, lithium-containing transition metal phosphates (for example, LiFePO₄, LiCoPO₄, LiMnPO₄, and LiNiPO₄), transition metal oxides (for example, MnO₂ and V₂O₅), transition metal sulfides (for example, MoS₂ and TiS₂), conductive polymers (for example, polyaniline, polypyrrole, polythiophene, polyacetylene, and poly-p-phenylene and polyvinylcarbazole), and the like, and two or more of these materials may be used in combination.

Incidentally, the lithium-containing transition metal phosphate may be one in which a part of the transition metal site is replaced with another transition metal.

The volume average particle diameter of the positive electrode active material particles is preferably 0.01 µm to 100 µm, more preferably 0.1 µm to 35 µm, and even more preferably 2 µm to 30 µm from the viewpoint of electric properties of the battery.

The positive electrode active material particles may be a coated positive electrode active material particles having at least a part of its surface coated with a coating material containing a polymer compound.

When the periphery of the positive electrode active material particle is coated with the coating material, the change in volume of the positive electrode is mitigated, thereby making it possible to suppress the expansion of the positive electrode.

As the polymer compound constituting the coating material, those described as resins for coating active materials in Japanese Laid-open Patent Publication No. 2017-054703, Pamphlet of International Publication No. WO 2015-005117, or the like can be suitably used.

The coating material may contain a conductive agent.

As the conductive agent, the same one as the conductive filler contained in the positive electrode current collector can be suitably used.

### (Electrolytic Solution)

Examples of the electrolytic solution include those containing an electrolyte and a non-aqueous solvent.

As the electrolyte, ones used for known electrolytic solutions, and the like can be used, and examples of the electrolyte include inorganic acid lithium salts such as LiPF₆, LiBF₄, LiSbF₆, LiAsF₆, LiN(FSO₂)₂, and LiClO₄, and organic acid lithium salts such as LiN(CF₃SO₂)₂, LiN(C₂F₅SO₂)₂, and LiC(CF₃SO₂)₃, and LiN(FSO₂)₂ (also referred to as LiFSI) or LiPF₆ is preferable.

The electrolyte concentration of the electrolytic solution is not particularly limited, and is preferably 0.5 to 5 mol/L, more preferably 0.8 to 4 mol/L, and even more preferably 1 to 2 mol/L.

As the non-aqueous solvent, ones used for known electrolytic solutions, and the like can be used, and for example, a lactone compound, a cyclic or chain carbonic acid ester, a chain carboxylic acid ester, a cyclic or chain ether, a phosphoric acid ester, a nitrile compound, an amide compound, a sulfone, a sulfolane, and the like and mixtures thereof can be used.

Examples of the lactone compound include five-membered ring lactone compounds (such as γ-butyrolactone and γ-valerolactone), and six-membered ring lactone compounds (such as δ-valerolactone).

Examples of the cyclic carbonic acid ester include propylene carbonate, ethylene carbonate, and butylene carbonate.

Examples of the chain carbonic acid ester include dimethyl carbonate, methyl ethyl carbonate, diethyl carbonate, methyl-n-propyl carbonate, ethyl-n-propyl carbonate, and di-n-propyl carbonate.

Examples of the chain carboxylic acid ester include methyl acetate, ethyl acetate, propyl acetate, and methyl propionate.

Examples of the cyclic ether include tetrahydrofuran, tetrahydropyran, 1,3-dioxolane, and 1,4-dioxane.

Examples of the chain ether include dimethoxymethane, and 1,2-dimethoxyethane.

Examples of the phosphoric acid ester include trimethyl phosphate, triethyl phosphate, ethyl dimethyl phosphate, diethyl methyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphosphoran-2-one, 2-trifluoroethoxy-1,3,2-dioxaphosphoran-2-one, and 2-methoxyethoxy-1,3,2-dioxaphosphoran-2-one.

Examples of the nitrile compound include acetonitrile. Examples of the amide compound include DMF. Examples of the sulfone include dimethyl sulfone, and diethyl sulfone.

The non-aqueous solvents may be used alone, or in combination of two or more thereof.

Among the non-aqueous solvents, the lactone compound, the cyclic carbonic acid ester, the chain carbonic acid ester, and the phosphoric acid ester are preferable from the viewpoint of battery output and charge-discharge cycle characteristics, the lactone compound, the cyclic carbonic acid ester, and the chain carbonic acid ester are more preferable, and a liquid mixture of the cyclic carbonic acid ester and the chain carbonic acid ester is particularly preferable. A liquid mixture of the ethylene carbonate (EC) and the dimethyl carbonate (DMC), or a liquid mixture of the ethylene carbonate (EC) and the propylene carbonate (PC) is most preferable.

### (Others)

The positive electrode active material composition may contain a conductive auxiliary agent.

As the conductive auxiliary agent, a conductive material that is the same as the conductive filler contained in the positive electrode current collector can be suitably used.

For the conductive auxiliary agent, when the positive electrode active material layer is formed, the weight ratio of the conductive auxiliary agent in the positive electrode active material layer is preferably within a range of 3% to 10% by weight.

The positive electrode active material composition preferably does not contain a binding agent.

In the case where the positive electrode active material composition does not contain a binding agent, a non-bound body of a positive electrode active material layer can be formed.

Here, the non-bound body means that the position of the positive electrode active material particle is not fixed by a binding agent (also referred to as a binder), and the positive electrode active material particles and the positive electrode active material particle and the positive electrode current collector are irreversibly fixed to each other.

The case where the positive electrode active material layer is a non-bound body is preferable since the positive electrode active material particles are not irreversibly fixed to each other, thus making it possible to separate the positive electrode active material particles without mechanically destroying the interface between the positive electrode active material particles, and even in the case where stress is applied to the positive electrode active material layer, movement of the positive electrode active material particles makes it possible to prevent the destruction of the positive electrode active material layer.

Incidentally, in the present specification, the binding agent means a chemical agent incapable of reversibly fixing the positive electrode active material particles to each other and reversibly fixing the positive electrode active material particle to the positive electrode current collector, and examples of the binding agent include known solvent drying type binding agent for a lithium ion battery such as starch, polyvinylidene fluoride, polyvinyl alcohol, carboxymethyl cellulose, polyvinylpyrrolidone, tetrafluoroethylene, styrene-butadiene rubber, polyethylene, and polypropylene. These binding agents are used by being dissolved or dispersed in a solvent, and when the solvent is volatilized and distilled off, the binding agents become solid without surfaces exhibiting adhesiveness, thus failing to reversibly fix the positive electrode active material particles to each other and the positive electrode active material particle to the positive electrode current collector.

The positive electrode active material composition may contain an adhesive resin.

As the adhesive resin, for example, there can be suitably used one prepared by mixing a small amount of an organic solvent with the resin for coating non-aqueous secondary battery active materials, described in Japanese Laid-open Patent Publication No. 2017-054703 and adjusting the glass transition temperature of the mixture to room temperature or lower, one described as an adhesive in Japanese Laid-open Patent Publication No. H10-255805, and the like.

The adhesive resin means a resin having adhesiveness (properties that allow adhesion by applying slight pressure without the use of water, solvent, heat, or the like) does not become solid even when a solvent component is volatilized and dried. On the other hand, the solution drying type binder for electrodes used as a binding agent means a binder that dries and solidifies by volatilizing a solvent component so that active materials are firmly bonded and fixed to each other.

Therefore, the binding agent (solution drying type binder for electrodes) and the adhesive resin are different materials.

### [Negative Electrode Active Material Composition]

The negative electrode active material composition contains negative electrode active material particles and an electrolytic solution.

### (Negative Electrode Active Material Particle)

Examples of the negative electrode active material particles include carbon-based materials [such as graphite, non-graphitizable carbon, amorphous carbon, and resin burned bodies (for example, burned and carbonized phenol resin, and furan resin), cokes (for example, pitch coke, needle coke, and petroleum coke), and carbon fiber], silicon-based materials [such as silicon, silicon oxide (SiOx), silicon-carbon complexes (such as complexes in which the surfaces of carbon particles are coated with silicon and/or silicon carbide, complexes in which the surfaces of silicon particles or silicon oxide particles are coated with carbon and/or silicon carbide, and silicon carbide), silicon alloys (such as a silicon-aluminum alloy, a silicon-lithium alloy, a silicon-nickel alloy, a silicon-iron alloy, a silicon-titanium alloy, a silicon-manganese alloy, a silicon-copper alloy, and a silicon-tin alloy), and the like], conductive polymers (for example, polyacetylene, and polypyrrole), metals (such as tin, aluminum, zirconium, and titanium), metal oxides (such as titanium oxide and lithium-titanium oxide), and metal alloys (for example, a lithium-tin alloy, a lithium-aluminum alloy, and a lithium-aluminum-manganese alloy), and mixtures thereof with carbon-based materials.

Among the above-described negative electrode active material particles, those that do not contain lithium or lithium ions therein may be subjected to a pre-doping treatment in which a part or all of the negative electrode active material particles are pre-doped with lithium or lithium ions in advance.

Among these, from the viewpoint of battery capacity, or the like, the carbon-based materials, the silicon-based materials, and the mixtures thereof are preferable, as the carbon-based material, graphite, non-graphitizable carbon, and amorphous carbon are more preferable, and as the silicon-based material, silicon oxide and silicon-carbon complexes are even more preferable.

The volume average particle diameter of the negative electrode active material particles is preferably 0.01 to 100 µm, more preferably 0.1 to 20 µm, and even more preferably 2 to 10 µm from the viewpoint of electric properties of the battery.

In the present specification, the volume average particle diameter of the negative electrode active material particles means the particle diameter at an integrated value of 50% (Dv50) in a particle size distribution determined by the microtrack method (laser diffraction scattering method). The microtrack method is a method of determining the particle size distribution while using the scattered light obtained by irradiating particles with laser light. Incidentally, for the measurement of the volume average particle diameter, a microtrack manufactured by NIKKISO CO., LTD., or the like can be used.

The negative electrode active material particles may be a coated negative electrode active material particles having at least a part of its surface coated with a coating material containing a polymer compound.

When the periphery of the negative electrode active material particle is coated with the coating material, the change in volume of the negative electrode is mitigated, thereby making it possible to suppress the expansion of the negative electrode.

As the coating material, the same one as the coating material constituting the coated positive electrode active material particle can be suitably used.

### (Electrolytic Solution)

As the composition of the electrolytic solution, the same electrolytic solution as that contained in the positive electrode active material composition can be suitably used.

### (Others)

The negative electrode active material composition may contain a conductive auxiliary agent.

As the conductive auxiliary agent, the same conductive material as the conductive filler contained in the positive electrode active material composition can be suitably used.

The weight ratio of the conductive auxiliary agent when the negative electrode active material layer is formed is preferably within range of 2% to 10% by weight.

The negative electrode active material composition may contain an adhesive resin.

As the adhesive resin, the same one as the adhesive resin, which is an arbitrary component of the positive electrode active material composition, can be suitably used.

The negative electrode active material composition preferably does not contain a binding agent.

In the case where the negative electrode active material composition does not contain a binding agent, a non-bound body of a negative electrode active material layer can be formed.

The reason why the negative electrode active material layer is preferably a non-bound body is the same as the reason why the positive electrode active material layer is preferably a non-bound body.

### [Compression Step]

Subsequently, the compression step constituting the method of manufacturing a lithium ion battery of the present invention will be described.

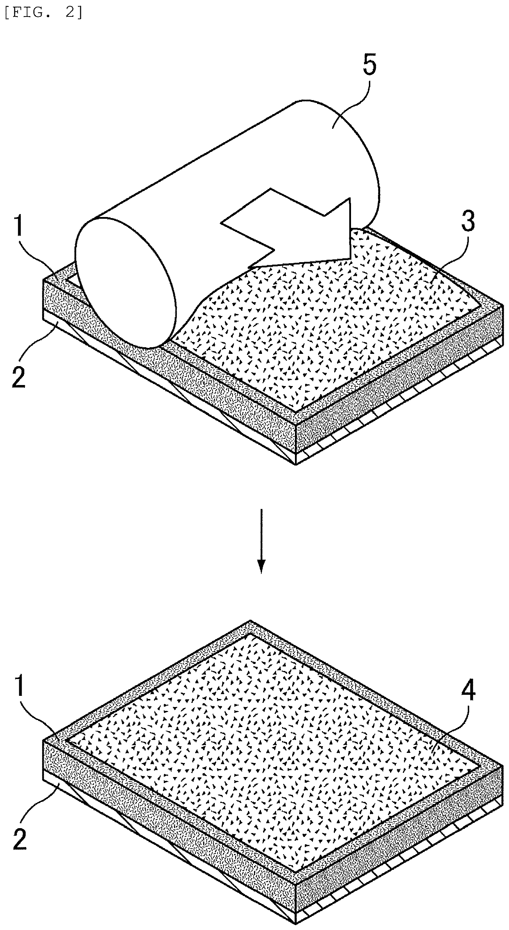

FIG. 2 is a perspective view schematically showing an example of a compression step constituting the method of manufacturing a lithium ion battery of the present invention.

In the compression step, the electrode active material composition 3 supplied to the space surrounded by the sealing material 1 and the bottom member 2 is compressed by a compressor 5 to form the electrode active material layer 4.

### (Electrode Active Material Layer)

The electrode active material layer 4 becomes a positive electrode active material layer in the case where the above-mentioned positive electrode active material composition is compressed by the compressor 5, and becomes a negative electrode active material layer in the case where the above-mentioned negative electrode active material composition is compressed by the compressor 5.

The thickness of the electrode active material layer 4 is not particularly limited, and is preferably 150 to 600 µm, and more preferably 200 to 450 µm from the viewpoint of battery performance.

### (Compressor)

The compressor 5 is not particularly limited, and examples thereof include a roll press machine, a vacuum press machine, a hydraulic press machine, and an oil hydraulic press machine.

In the case where the compressor 5 is a roll press machine, an interval between the press rolls is not particularly limited and can be appropriately set according to the thickness and density of the electrode active material layer 4. For example, the interval between the press rolls is preferably 100 to 1000 µm.

The speed of compression in the compression step is not particularly limited, and can be appropriately set to a speed at which the bottom member 2 and the electrode active material layer 4 are not bent or wrinkled. For example, in the case where the compressor 5 is a roll press machine, the rotation speed of the roll is preferably 1 to 20 m/min from the viewpoint of maintaining a sufficient compression holding time.

The linear pressure applied to the electrode active material composition 3 by the compressor 5 is preferably 35 to 3500 N/cm.

The linear pressure applied to the electrode active material composition 3 by the compressor 5 means the linear pressure calculated from the load obtained by a load cell attached to the compressor 5 and the thickness of the electrode active material layer after compression.

In the case where the bottom member 2 is an electrode current collector, an electrode can be obtained by compressing the electrode active material composition 3 by the compression step and forming the electrode active material layer 4 on the electrode current collector.

### [Recovery Step]

In the case where the mask material is arranged on the surface of the sealing material 1, it is preferable to provide a recovery step of recovering the mask material and the electrode active material composition 3 spilled on the mask material after the supply step and the compression step.

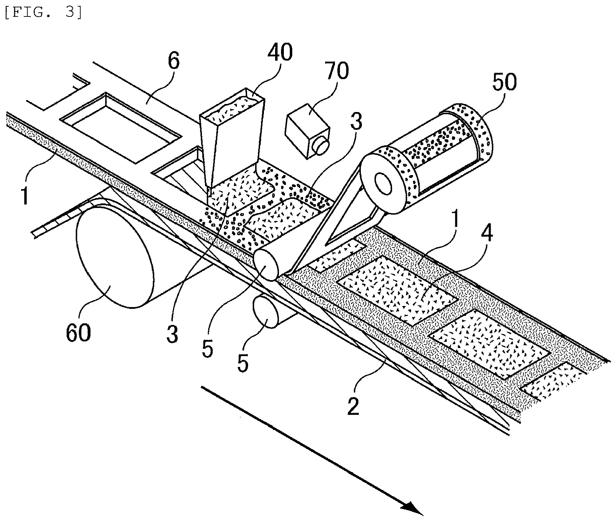

FIG. 3 is a perspective view schematically showing an example of a recovery step as a preferable aspect of the method of manufacturing a lithium ion battery of the present invention.

As shown in FIG. 3, the sealing material 1 in which a mask material 6 is arranged on the surface and the bottom member 2 are transported by transport means 60 in one direction (in FIG. 3, a direction indicated by the arrow), and the electrode active material composition 3 is supplied by supply means 40 to the space surrounded by the sealing material 1 and the bottom member 2. The electrode active material composition 3 supplied by the supply means 40 is compressed by the compressor 5 to form the electrode active material layer 4. Thereafter, the mask material 6 arranged on the surface of the sealing material 1 is separated from the sealing material 1 by recovery means 50, and is recovered together with the electrode active material composition 3 spilled on the mask material 6. The recovered electrode active material composition 3 can be reused.

Further, by measuring the state (scattering condition) of the electrode active material composition 3 on the mask material 6 with a camera 70 or the like, the result can be fed back to the supply step and the compression step.

The recovery step may or may not be performed continuously with the supply step, the compression step, and the combination step.

In the present specification, the electrode active material composition 3 spilled on the mask material 6 during the supply step and the compression step is referred to as the electrode active material composition 3 even after the compression step.

### [Transfer Step]

Since the electrode manufacturing step further includes a transfer step of transferring the electrode active material layer 4 formed in the compression step from the bottom member 2 to the electrode current collector, an electrode can be obtained.

In the transfer step, for example, in the case where the bottom member 2 is the above-mentioned release material, an electrode can be obtained by transferring the electrode active material layer 4 from the bottom member 2, which is a release material, to the electrode current collector. Further, in the case where the bottom member 2 is an electrode current collector, a new electrode can be obtained by transferring the electrode active material layer 4 from the bottom member 2, which is an electrode current collector, to another electrode current collector.

The transfer step is not particularly limited, and a known transfer method can be used.

Specifically, an electrode can be obtained by overlapping the electrode active material layer 4 on the electrode current collector, then performing heating or pressurizing, and then peeling off the bottom member 2.

### <Combination Step>

A lithium ion battery can be manufactured by combining the electrode manufactured by the electrode manufacturing step with a separator and a pair of electrodes.

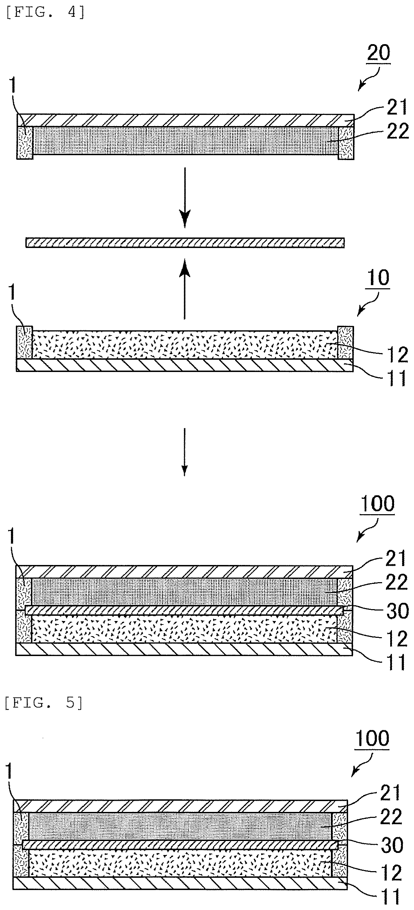

FIG. 4 is a cross-sectional view schematically showing an example of a combination step constituting the method of manufacturing a lithium ion battery of the present invention.

In the combination step, a positive electrode 10 having a positive electrode current collector 11, a positive electrode active material layer 12 and the sealing material 1, a separator 30, and a negative electrode 20 having a negative electrode current collector 21, a negative electrode active material layer 22 and the sealing material 1 are combined, the sealing material 1 is bonded by heating, and thereby the lithium ion battery 100 can be obtained.

A method of heating the sealing material 1 is not particularly limited, and for example, an impulse sealer or the like can be used.

When combining the positive electrode 10, the separator 30, and the negative electrode 20, the above-mentioned electrolytic solution may be separately injected.

In the method of manufacturing a lithium ion battery of the present invention, it is preferable that the method includes a step of manufacturing the positive electrode 10 and the negative electrode 20 by the electrode manufacturing step, and a combination step of combining the positive electrode 10, the separator 30, and the negative electrode 20, and the supply step, the compression step, and the combination step are continuously performed.

In addition, in the case where the electrode manufacturing step further includes a transfer step, it is preferable that the method includes a step of manufacturing the positive electrode 10 and the negative electrode 20 by the electrode manufacturing step, and a combination step of combining the positive electrode 10, the separator 30, and the negative electrode 20, and the supply step, the compression step, the transfer step, and the combination step are continuously performed.

In addition, in the present specification, the term "continuously performed" means a series of electrode manufacturing steps (supply step and compression step, and as necessary, punching step, recovery step, and transfer step) and the combination step are performed on a series of manufacturing lines. The "series of manufacturing lines" include, for example, a positive electrode manufacturing process line for manufacturing a positive electrode and a negative electrode manufacturing process line for manufacturing a negative electrode, and a positive electrode manufacturing process line and a negative electrode manufacturing process line. For example, a case where a line is formed by merging and performing a combination process.

### (Separator)

The separator 30 used in the combination step is not particularly limited, and for example, known separators to be used for a lithium ion battery such as a porous film formed of polyethylene or polypropylene, a laminated film of the above-described porous films (such as a laminated film of a porous polyethylene film and porous polypropylene), a non-woven fabric formed of synthetic fibers (such as polyester fibers and aramid fibers), glass fibers, or the like, and those made by attaching ceramic fine particles such as silica, alumina, or titania to surfaces thereof can be used.

### <Lithium Ion Battery>

A lithium ion battery obtained by the method of manufacturing a lithium ion battery of the present invention has a set of a positive electrode current collector, a positive electrode active material layer, a separator, a negative electrode active material layer, and a negative electrode current collector laminated in this order, and has a configuration in which the outer peripheries of the positive electrode active material layer and the negative electrode active material layer are sealed with a sealing material and an electrolytic solution is enclosed.

FIG. 5 is a cross-sectional view schematically showing an example of a lithium ion battery manufactured by the method of manufacturing a lithium ion battery of the present invention.

As shown in FIG. 5, a lithium ion battery 100 has a set of the positive electrode current collector 11, the positive electrode active material layer 12, the separators 30, the negative electrode active material layer 21, and the negative electrode current collector 22 laminated in this order, and has a configuration in which the outer peripheries of the positive electrode active material layer 12 and the negative electrode active material layer 22 is sealed with the sealing material 1, and the electrolytic solution is enclosed.

### [Method and Apparatus for Manufacturing Lithium Ion Electrode Material]

Subsequently, a method and an apparatus for manufacturing the lithium ion electrode material will be described.

Japanese Laid-open Patent Publication No. 2016-181469 discloses that a power generation element obtained by laminating an electrode sheet obtained by applying an active material on a sheet and then pressurizing the sheet with a pressure roll and a separator is suitable as a power generation element used for a lithium ion battery with a high energy density that can be used for a power supply for electric vehicles and a hybrid electric vehicles.

However, the method of manufacturing an electrode described in Japanese Laid-open Patent Publication No. 2016-181469 has a problem that the method cannot be applied in the case where the fluidity of the electrode composition to be applied is low. Specifically, since the fluidity of the electrode composition is low, a uniform coating film cannot be formed. Further, since the pressurized electrode composition is brittle, cracks or defects may be generated when the electrode sheet is cut. For these reasons, there is a problem that the battery performance such as durability is not sufficient in the case where the electrode sheet is formed into a battery.

The method and apparatus for manufacturing a lithium ion electrode material shown below are made in view of the above problems, and even in the case where the fluidity of the electrode composition is low, a uniform electrode composition layer can be arranged on the current collector at predetermined intervals.

First, an electrode material for a lithium ion battery obtained by the method of manufacturing the electrode material for a lithium ion battery will be described.

In the electrode material for a lithium ion battery obtained by the method of manufacturing the electrode material for a lithium ion battery, an electrode composition layer arrangement portion in which an electrode composition layer formed of an electrode composition containing an electrode active material is arranged is intermittently arranged on the surface of a continuous sheet-shaped base material.

The fact that the electrode composition layer arrangement portion is intermittently arranged on the surface of the continuous sheet-shaped base material means that the electrode composition layer arrangement portion, and a portion in which the electrode composition layer is not arranged (electrode composition layer non-arrangement portion) are present on the surface of one base material, and two or more electrode composition layer arrangement portions are present, and are not in contact with each other. The distance between the electrode composition layer arrangement portions provided so as not to come into contact with each other may be constant or may be different.

The electrode composition layer arranged in the electrode composition layer arrangement portion functions as an electrode for a lithium ion battery by being arranged on the current collector. Therefore, in the case where the base material is a current collector, the electrode material for a lithium ion battery can be used as an electrode for a lithium ion battery. On the other hand, in the case where the base material is not a current collector, the electrode for a lithium ion battery can be obtained by moving the electrode composition layer onto the current collector.

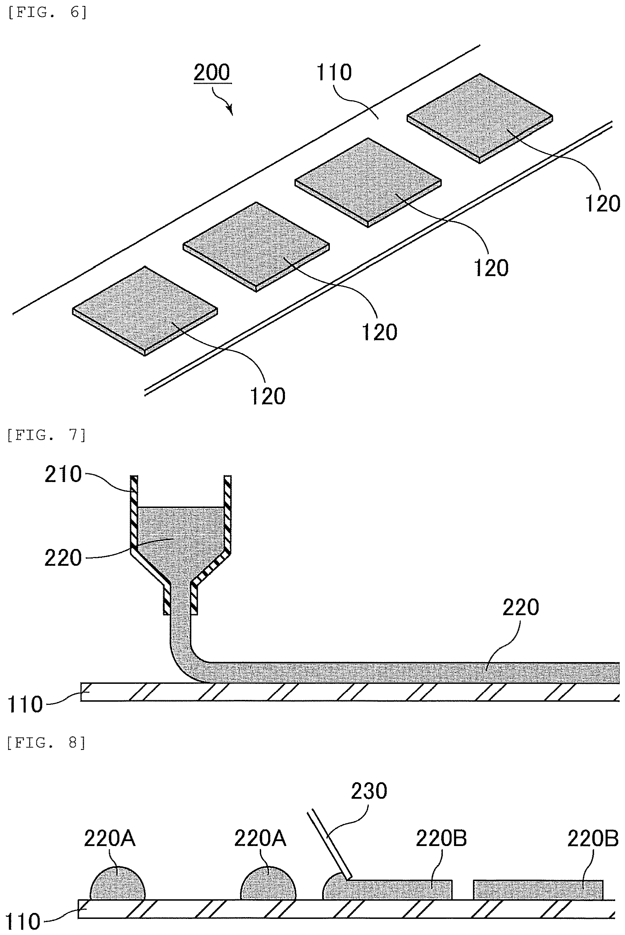

An example of the electrode material for a lithium ion battery obtained by the method of manufacturing the electrode material for a lithium ion battery will be described with reference to FIG. 6.

FIG. 6 is a perspective view schematically showing an example of an electrode material for a lithium ion battery manufactured by the method of manufacturing the electrode material for a lithium ion battery.

As shown in FIG. 6, in an electrode material 200 for a lithium ion battery, an electrode composition layer arrangement portion in which an electrode composition layer 120 formed of an electrode composition containing an electrode active material is arranged is intermittently arranged on the surface of a continuous sheet-shaped base material 110.

On the surface of the base material 110, a region other than the region in which the electrode composition layer 120 is arranged (the electrode composition layer arrangement portion) is also referred to as an electrode composition layer non-arrangement portion.

In the electrode material 200 for a lithium ion battery, the electrode composition layer arrangement portion on which the electrode composition layer 120 is arranged has an island shape surrounded by the electrode composition layer non-arrangement portion, and the electrode composition layer non-arrangement portion and the island-shaped electrode composition layer arrangement portion are arranged alternately.

In the case where the electrode material for a lithium ion battery obtained by the method of manufacturing the electrode material for a lithium ion battery is cut in a direction along the longitudinal direction of the base material and a thickness direction of the base material to observe the cut cross section, the electrode composition layer arrangement portion and the electrode composition layer non-arrangement portion are alternately arranged.

In the electrode material 200 for a lithium ion battery shown in FIG. 6, there are regions in which the electrode composition layer is not provided at both end portions in the width direction of the base material 110. However, in the electrode material for a lithium ion battery obtained by the method of manufacturing the electrode material for a lithium ion battery, the electrode composition layer may be arranged up to the widthwise end portion of the base material. In this case, it can be said that the electrode composition layer arrangement portion in which the electrode composition layer is arranged and the electrode composition layer non-arrangement portion are arranged in a striped pattern, respectively.

When a lithium ion battery is manufactured using the electrode material for a lithium ion battery obtained by the method of manufacturing the electrode material for a lithium ion battery, as necessary, the base material is cut and the electrode composition layer arrangement portion is separated. At this time, by setting the position where the base material is cut to the electrode composition layer non-arrangement portion, it is not necessary to cut the electrode composition layer arrangement portion, and cracks and defects are less likely to be generated in the electrode composition layer. As a result, a lithium ion battery having excellent battery performance such as durability can be manufactured.

### [Method of Manufacturing Electrode Material for Lithium Ion Battery]

The method of manufacturing the electrode material for a lithium ion battery is a method of manufacturing an electrode material for a lithium ion battery in which an electrode composition layer arrangement portion in which an electrode composition layer formed of an electrode composition containing an electrode active material is arranged is intermittently arranged on the surface of a continuous sheet-shaped base material, the method including a supply step of continuously supply the electrode composition onto the base material, a pressurization step of pressurizing the electrode composition supplied onto the base material by the supply step to obtain the electrode composition layer, and a removal step of removing a part of the electrode composition supplied onto the base material by the supply step to form an electrode composition layer arrangement portion on the base material.

In the method of manufacturing the electrode material for a lithium ion battery, the order of the removal step and the pressurization step is not particularly limited. Therefore, the pressurization step may be performed after the removal step is performed, or the removal step may be performed after the pressurization step is performed. In addition, the pressurization step and the removal step may be performed at the same time. Hereinafter, the case where the removal step is first performed and then the pressurization step is performed will be described.

### [Supply Step]

In the supply step, the electrode composition containing the electrode active material is continuously supplied onto the continuous sheet-shaped base material.

The term "continuously supply" means that the electrode composition is supplied without being interrupted so as to straddle two or more electrode composition layer arrangement portions formed by the removal step described later. At this time, the electrode composition may be intermittently supplied. However, in the case where the electrode composition is intermittently supplied, the electrode composition formed on the base material by intermittently supplying the electrode composition is formed into two or more the electrode composition layer arrangement portions by the removal step described later. Therefore, in the case where only one electrode composition layer arrangement portion is formed in one intermittently supplied electrode composition, it cannot be said that the electrode composition is continuously supplied on the base material.

Further, the term "continuous sheet-shaped" means that the material has a sufficient length for intermittently arranging a plurality of electrode composition layer arrangement portions on a single base material.

Further, the term "supply on the base material" includes not only the case where the electrode composition is directly supplied to the surface of the base material but also the case where the electrode composition is supplied to another member arranged on the base material. Therefore, in the supply step, the electrode composition is directly or indirectly supplied onto the base material.

The thickness of the electrode composition supplied on the base material may be adjusted as necessary.

Examples of a method of adjusting the thickness of the electrode composition include a method using a squeegee, a rotating roller, a doctor blade, an applicator and the like. A step of adjusting the thickness of the electrode composition may be performed by an apparatus used in the above-mentioned supply step, or may be performed by using an apparatus different from the apparatus used in the supply step.

An example of the supply step will be described with reference to FIG. 7.

FIG. 7 is a cross-sectional view schematically showing an example of the supply step.

As shown in FIG. 7, in the supply step, an electrode composition 220 is continuously supplied onto the sheet-shaped base material 110. Specifically, a method of, while changing the relative positions of a hopper 210 capable of quantitatively supplying the electrode composition 220, and the base material 110, continuously supplying the electrode composition 220 from the hopper 210 arranged on the base material 110 can be used.

A method of changing the relative positions of the hopper 210 and the base material 110 is not particularly limited, and the base material 110 may be moved in one direction by a belt conveyor. In addition, a method in which wheels are provided on the hopper 210 to drive the wheels, a method in which the hopper 210 is wound in one direction by a winch, or the like may be used.

The hopper 210 corresponds to the supply means in the apparatus for manufacturing the electrode material for a lithium ion battery, which will be described later.

The change rate of the relative positions of the hopper 210 and the base material 110 can be appropriately adjusted depending on the density and thickness of the electrode composition layer and the viscosity of the electrode composition layer.

Another example of the supply step will be described with reference to FIG. 8.

FIG. 8 is a cross-sectional view schematically showing another example of the supply step.

As shown in FIG. 8, in the supply step, the electrode composition 220A is intermittently supplied onto the sheet-shaped base material 110 by a quantitative supply apparatus (not shown). The intermittently supplied electrode composition 220A is adjusted in thickness by passing between the base material 110 and a squeegee 230 to become an electrode composition 220B.

One electrode composition 220B becomes two or more electrode composition layer arrangement portions by performing a removal step later. That is, in the supply step shown in FIG. 8, since the electrode composition is supplied so as to straddle two or more electrode composition layer arrangement portions formed in the subsequent removal step, it can be said that the electrode composition is continuously supplied.

The hopper and the squeegee used as necessary correspond to the supply means in the apparatus for manufacturing the electrode material for a lithium ion battery, which will be described later.

For the base material, the constituent material is not particularly limited. A current collector itself may be used as the base material. In the case where the base material is not a current collector, the electrode composition layer formed on the surface of the base material may be peeled off from the base material. In the case where a current collector is used as the base material, it is not necessary to peel off the electrode composition layer.

As the current collector, the electrode current collector described in the method of manufacturing a lithium ion battery of the present invention can be preferably used.

As the base material other than the current collector, a sheet-shaped material [such as a polymer film (a polyester film, a polyolefin sheet, a Teflon (registered trademark) sheet, or the like), or paper] that does not function as a current collector can be used.

In addition, the base material may be a composite material. Examples of the case where the base material is a composite material include a current collector and a current collector with a frame having an insulator (also referred to as a frame-shaped member) arranged in an annular shape along the outer periphery of the current collector.

As the electrode composition used in the supply step, the electrode active material composition described in the method of manufacturing a lithium ion battery of the present invention can be preferably used.

### [Removal Step]

In the removal step, a part of the electrode composition supplied on the base material is removed to form an electrode composition layer arrangement portion on the base material. The region in which the electrode composition layer arrangement portion is not formed becomes an electrode composition layer non-arrangement portion.

In the case where the pressurization step is performed after the removal step and in the case where the size of the electrode composition layer arrangement portion changes due to the pressurization step, it is preferable to preset the size of the electrode composition layer arrangement portion so as to obtain a desired shape after pressurization.

### [First Embodiment of Removal Step]

As the method of removing a part of the electrode composition supplied on the base material, for example, a method in which before the supply step, a mask layer having opening portions at the positions corresponding to the arrangement pattern of the electrode composition layer arrangement portion is placed on the surface of the base material, and after the supply step, the electrode composition supplied onto the mask layer is removed from the base material may be used.

The step of placing the mask layer having opening portions on the surface of the base material is also referred to as a masking step.

The position and shape of the opening portion of the mask layer corresponds to the position and shape of the electrode composition layer arrangement portion formed by the removal step.

Further, in the present specification, the arrangement pattern of the electrode composition layer arrangement portion refers to the arrangement of the electrode composition layer arrangement portion including the position, shape, size of the electrode composition layer arrangement portion, the arrangement of a plurality of electrode composition layer arrangement portions, and the like.

In the method of manufacturing the electrode material for a lithium ion battery, it is preferable that in the case where the removal step of the first embodiment is performed, a masking step of placing a mask layer with intermittently arranged opening portions on the surface of the base material is provided before the removal step, in the supply step, the electrode composition is supplied onto the mask layer and the entire surfaces of the opening portions, and the removal step is a step of removing the electrode composition supplied on the mask layer from the base material.

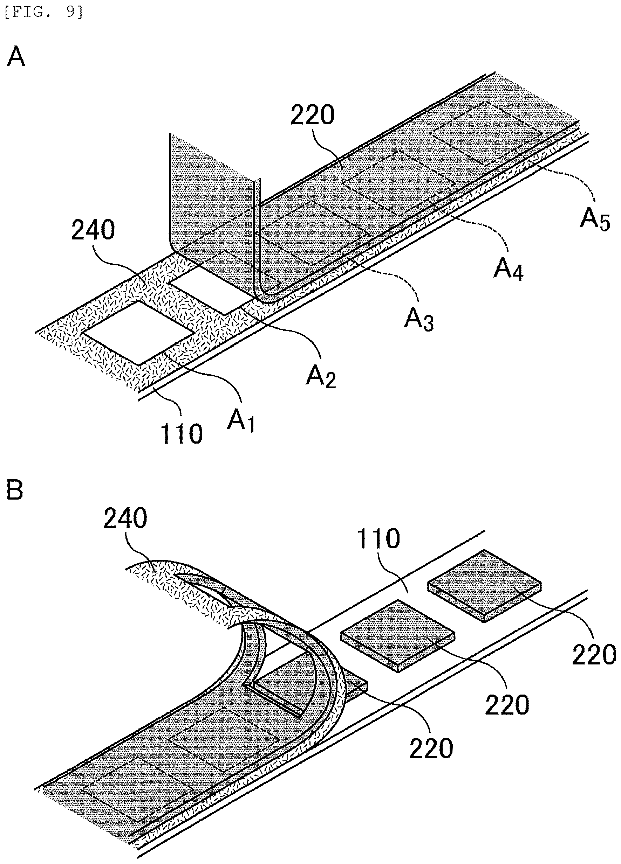

An example of the removal step will be described with reference to FIGS. 9A and 9B.

FIG. 9A is a perspective view schematically showing an example of the supply step, and FIG. 9B is a perspective view schematically showing an example of the removal step.

As shown in FIG. 9A, before the supply step, a mask layer 240 having opening portions (A₁, A₂, A₃, A₄ and A₅) having a size corresponding to the electrode composition layer arrangement portion is placed on the base material 110.

In this case, in the supply step, the electrode composition 220 is supplied onto the mask layer 240 and on the entire surface of the opening portions (A₁, A₂, A₃, A₄ and A₅) of the mask layer 240.

Subsequently, as shown in FIG. 9B, the mask layer 240 is removed from the base material 110 in the removal step. At this time, the electrode composition 220 arranged in the opening portions of the mask layer 240 remains on the base material 110. On the other hand, the electrode composition 220 supplied on the mask layer 240 is removed from the base material 110 together with the mask layer 240.

Since the electrode composition 220 remains only in the region in which the opening portions (A₁, A₂, A₃, A₄ and A₅) of the mask layer 240 are located, an electrode composition layer arrangement portion, which is a region in which the electrode composition 220 is provided, is intermittently formed on the base material 110.

In the first embodiment of the removal step, a two-step removal step may be performed.

The two-step removal step includes, for example, a first removal step of removing at least a part of the electrode composition supplied on the mask layer from the mask layer, and a second removal step of removing the mask layer from the base material.

In the case where the electrode composition on the mask layer is not completely removed in the first removal step, the electrode composition remaining on the mask layer may be removed together with the mask layer in the second removal step.

When at least a part of the electrode composition supplied onto the mask layer is removed by the first removal step, during the second removal step of removing the mask layer from the base material, the electrode composition remaining on the mask layer can be prevented from falling on the electrode composition arranged on the opening portions of the mask layer.

The plurality of opening portions provided in the mask layer are provided at positions corresponding to the arrangement pattern of the electrode composition layer arrangement portion. The sizes of the plurality of opening portions may be the same or different as long as the opening portions have a size corresponding to each electrode composition layer arrangement portion. Further, the distance between the opening portions may be the same or different.

That is, in the method of manufacturing the electrode material for a lithium ion battery of the present invention, it is preferable that before the supply step, a masking step of placing a mask layer having opening portions at the positions corresponding to the arrangement pattern of the electrode composition layer arrangement portion is provided, in the supply step, the electrode composition is supplied onto the mask layer and the entire surfaces of the opening portions, and the removal step is a step of removing the electrode composition supplied on the mask layer from the base material.

The mask layer 240 corresponds to removing means in the apparatus for manufacturing the electrode material for a lithium ion battery, which will be described later.

As the mask layer having opening portions, any structure can be used without limitation as long as the mask layer has a structure in which the mask layer can be separably overlapped on the base material and has a plurality of intermittently arranged opening portions of a predetermined size at predetermined positions. It is possible to use a metal sheet having an opening portion, a resin film having an opening portion, and the like.

The mask layer and the base material may be temporarily adhered so that the electrode composition does not enter between the mask layer and the base material in the supply step.

Further, a paint that forms a coating film that can be peeled off from the base material may be applied to the surface of the base material so as to leave a predetermined opening portion to form a mask layer.

### [Second Embodiment of Removal Step]

In addition, as another method of removing a part of the electrode composition supplied on the base material, there is a method of removing a part of the electrode composition directly supplied on the base material. As the method of removing a part of the electrode composition directly supplied on the base material, for example, a method in which a cover layer is placed on the continuously supplied electrode composition at the position corresponding to the arrangement pattern of the electrode composition layer arrangement portion, and the electrode composition is removed in the region in which the cover layer is not provided may be used. In this case, by removing a part of the electrode composition directly supplied on the base material (the electrode composition supplied to the region in which the cover layer is not supplied), the electrode composition layer arrangement portion is intermittently arranged on the base material.

In the method of manufacturing the electrode material for a lithium ion battery, in the case where the removal step of the second embodiment is performed, it is preferable that the removal step is a step of removing a part of the electrode composition directly supplied onto the base material and forming the electrode composition that is not removed into an electrode composition layer arrangement portion.

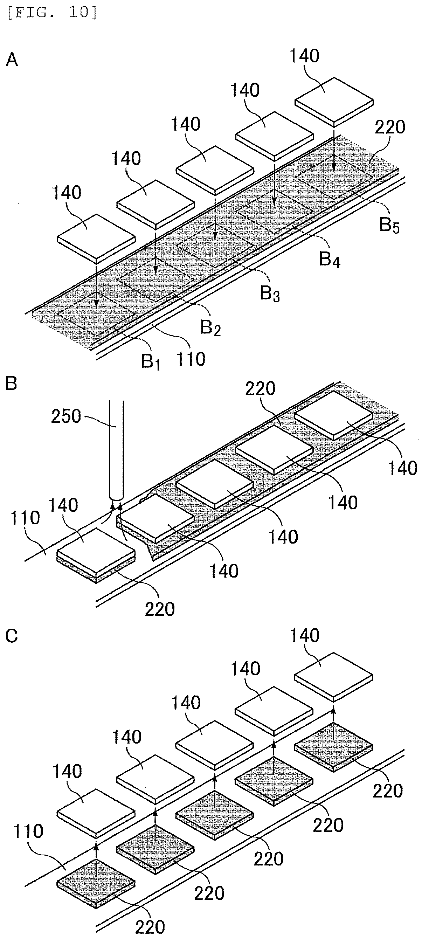

Another example of the removal step will be described with reference to FIGS. 10A, 10B and 10C.

FIGS. 10A, 10B and 10C are perspective views schematically showing another example of the removal step.

As shown in FIG. 10A, first, after the supply step, a cover layer 140 having a size corresponding to the electrode composition layer arrangement portion is placed at each of places where the electrode composition layers are arranged on the electrode composition 220. In FIG. 10A, the position where the cover layer 140 is placed is each region (B₁, B₂, B₃, B₄ and B₅) in which the electrode composition layer is arranged.

Subsequently, as shown in FIG. 10B, the electrode composition 220 not covered by the cover layer 140 is suction-removed by a suction device 250.

Finally, as shown in FIG. 10C, by removing the cover layer 140 from the electrode composition 220, the electrode composition layer arrangement portion, which is a region in which the electrode composition 220 is provided, can be intermittently arranged on the base material 110.

The cover layer 140 does not have to cover the entire unremoved portion of the electrode composition 220. For example, in FIGS. 10A and 10B, the electrode composition 220 may be exposed in the central portion of each cover layer 140. In the central portion of the cover layer 140, in the case where the electrode composition 220 is exposed, by removing the electrode composition 220 present in a region not covered by the cover layer 140 (excluding the exposed portion in the central portion of the cover layer 140) so as not to remove the electrode composition 220 in the region surrounded by the cover layer 140, the electrode composition layer arrangement portion can be intermittently arranged.

Examples of the method of removing the electrode composition in the region not covered by the cover layer 140 include a method of blowing off the electrode composition on the base material by using air blow or the like in addition to suction.

The cover layer 140 corresponds to the removing means in the apparatus for manufacturing the electrode material for a lithium ion battery, which will be described later.

The material constituting the cover layer is not particularly limited as long as the material can protect the electrode composition covered with the cover layer from the removing means and leave the electrode composition under the cover layer on the base material

Although the cover layers 140 shown in FIGS. 10B and 10C are separated from each other, the cover layers used in the removal step may be connected to each other and integrated. However, the cover layer is limited to those that do not hinder the removal of the electrode composition by the configuration in which the cover layers are connected to each other.

In addition, in the electrode material for a lithium ion battery shown in FIG. 6, the electrode composition layer arrangement portion arranged in one row is shown. However, as for the electrode composition layer arrangement portion, as long as each electrode composition layer arrangement portion is intermittently arranged, two or more rows formed by the electrode composition layer non-arrangement portions and the electrode composition layer arrangement portions arranged alternately may be arranged.

### [Third Embodiment of Removal Step]

As still another method of removing a part of the electrode composition supplied onto the base material, for example, a method in which before the supply step, a mask layer having opening portions having a plan view dimension equal to or larger than the electrode composition layer arrangement portion is placed at the positions according to the arrangement pattern of the electrode composition layer arrangement portion on the surface of the base material, after the supply step, a cover layer is placed at a position corresponding to the arrangement pattern of the electrode composition layer arrangement portion, and after removing at least a part of the electrode composition in the region in which the cover layer is not provided, the mask layer is removed from the base material may be used.

The step of placing the mask layer having opening portions on the surface of the base material is also referred to as a masking step.

According to the above method, the plan view dimension of the opening portion of the mask layer is set to be equal to or larger than that of the electrode composition layer arrangement portion.

In the case where the plan view dimension of the opening portion of the mask layer is larger than the plan view dimension of the electrode composition layer arrangement portion, a part of the electrode composition arranged in the opening portion of the mask layer is not covered by the cover layer. When the electrode composition supplied on the mask layer is removed from the base material in this state, the arrangement pattern of the obtained electrode composition layer arrangement portion does not match the arrangement pattern of the desired electrode composition layer arrangement portion. Therefore, the cover layer is placed on the electrode composition arranged in the opening portion of the mask layer so as to have a desired arrangement pattern of the electrode composition layer arrangement portion, the electrode composition in the region in which the cover layer is not provided is removed, then the mask layer is removed from the base material, and thereby the electrode composition layer arrangement portion can be formed on the base material.

In addition, in the step of removing the mask layer from the base material by covering the entire electrode composition arranged in the opening portion of the mask layer with the cover layer, the electrode composition remaining on the mask layer can be prevented from falling in the electrode composition layer arrangement portion.

In the method of manufacturing the electrode material for a lithium ion battery, in the case where the removal step of the third embodiment is performed, it is preferable that before the supply step, a masking step of placing a mask layer having opening portions having a plan view dimension equal to or larger than the electrode composition layer arrangement portion at the positions corresponding to the arrangement pattern of the electrode composition layer arrangement portion on the surface of the base material is provided, the electrode composition is supplied onto the mask layer and the entire surfaces of the opening portions in the supply step, and the removal step has and a first removal step of removing at least a part of the electrode composition supplied onto the mask layer from the mask layer, and a second removal step of removing the mask layer from the base material.

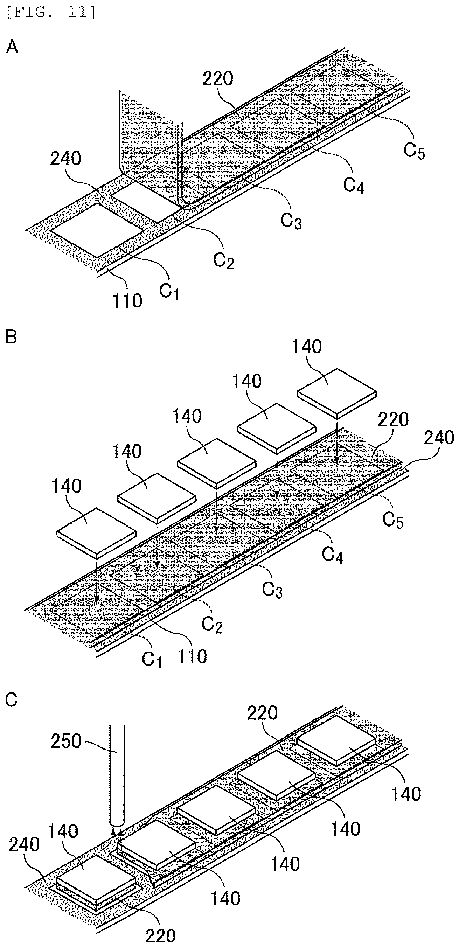

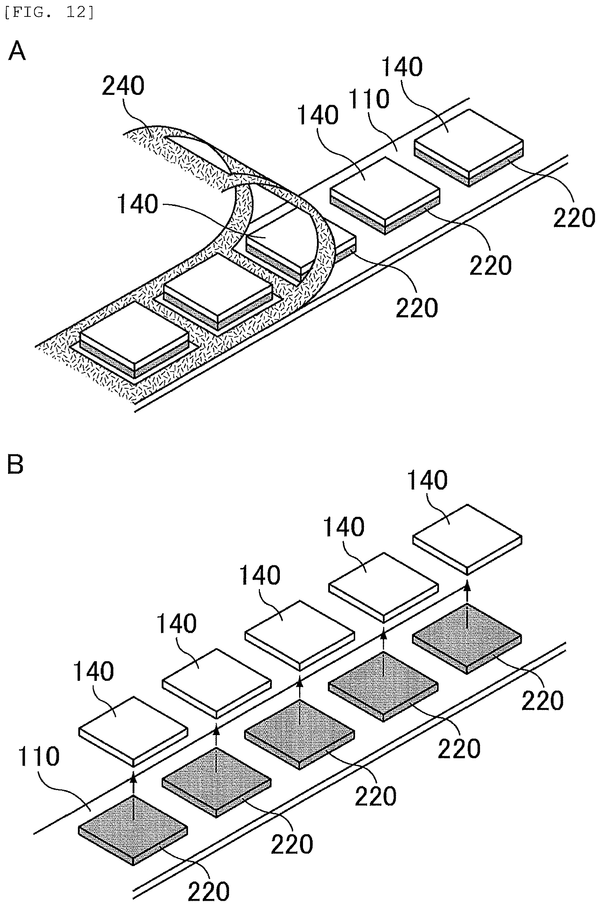

Still another example of the removal step will be described with reference to FIGS. 11A, 11B, 11C, 12A and 12B.

FIGS. 11A, 11B, 11C, 12A and 12B are perspective views schematically showing still another example of the removal step.

As shown in FIG. 11A, before the supply step, a mask layer 240 having opening portions (C₁, C₂, C₃, C₄ and C₅) having a plan view dimension larger than that of the electrode composition layer arrangement portion is placed on the base material 110. In this case, in the supply step, the electrode composition 220 is supplied onto the mask layer 240 and onto the entire surfaces of the opening portions (C₁, C₂, C₃, C₄ and C₅) of the mask layer 240.

Subsequently, as shown in FIG. 11B, the cover layer 140 is placed inside the opening portion of the mask layer 240. The position where the cover layer 140 is placed is each region in which the electrode composition layer is placed.

The plan view dimension of the opening portions (C₁, C₂, C₃, C₄ and C₅) provided in the mask layer 240 may be equal to or larger than the plan view dimension of the cover layer 140. FIG. 11B is an example in which the plan view dimension of the opening portions (C₁, C₂, C₃, C₄ and C₅) provided in the mask layer 240 is slightly larger than the plan view dimension of the cover layer 140, but the plan view dimension of the opening portions (C₁, C₂, C₃, C₄ and C₅) may be the same as the plan view dimension of the cover layer 140.

Subsequently, as shown in FIG. 11C, the first removal step of removing the electrode composition 220 in the region not covered by the cover layer 140 by the suction device 250 is performed. The plan view dimension of the opening portions (C₁, C₂, C₃, C₄ and C₅) of the mask layer 240 are larger than the plan view dimension of the cover layer 140. Therefore, not only the electrode composition 220 on the mask layer 240, but also the electrode composition 220 that is not covered by the cover layer 140 inside the opening portion of the mask layer 240 is removed by the suction device 250.

Subsequently, as shown in FIG. 12A, the second removal step of removing the mask layer 240 from the base material 110 is performed. At least a part of the electrode composition on the mask layer is removed by the first removal step. Therefore, in the second removal step, it is possible to prevent the electrode composition remaining on the mask layer 240 from falling and protect the electrode composition layer arrangement portion.

Finally, as shown in FIG. 12B, the cover layer 140 is removed.

By the above steps, the electrode composition layer arrangement portion can be formed on the base material 110.

### [Pressurization Step]

In the pressurization step, the electrode composition supplied on the base material by the supply step is pressurized to obtain an electrode composition layer.

As a preferable method of pressurizing the electrode composition, a flat plate press and a roll press may be used.

The pressurizing pressure in the flat plate press and the linear pressure in the roll press are not particularly limited, and can be adjusted according to the composition of the electrode composition, the fluidity of the electrode composition, and the density of the electrode composition.

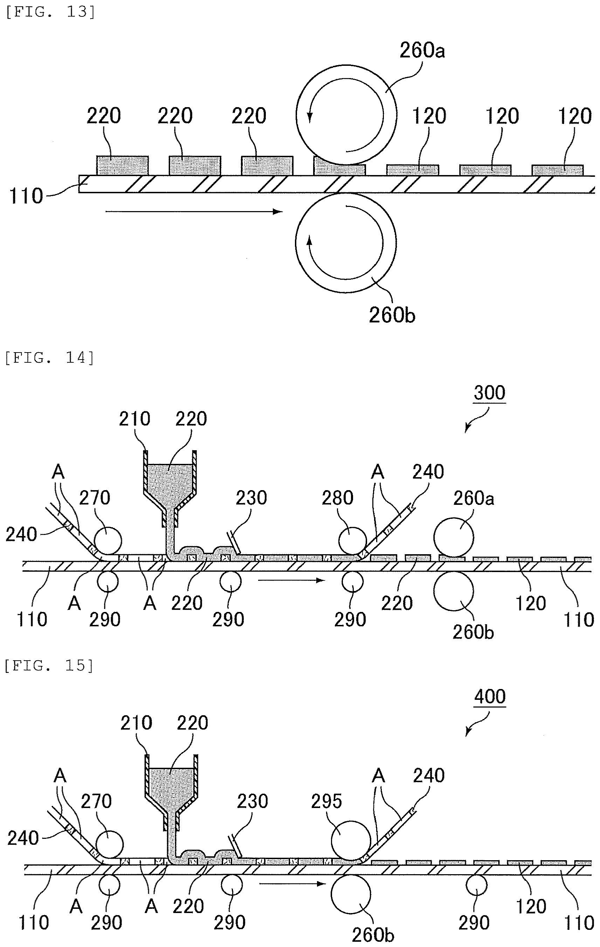

An example of the pressurization step in the case where a roll press is used will be described with reference to FIG. 13.

FIG. 13 is a cross-sectional view schematically showing an example of a pressurization step.

As shown in FIG. 13, in the pressurization step, the electrode composition 220 arranged on the base material 110 is pressurized by roll presses 260a and 260b. By the pressurization step, the electrode composition layer 120 is formed on the base material 110.

By the above steps, the electrode composition layer arrangement portion in which the electrode composition layer 120 is arranged is intermittently arranged on the surface of the continuous sheet-shaped base material 110, and the electrode material for a lithium ion battery as shown in FIG. 1 is obtained.

The roll presses 260a and 260b correspond to pressurizing means in the apparatus for manufacturing the electrode material for a lithium ion battery, which will be described later.

The pressurization step shown in FIG. 13 is an example of a pressurization step performed after the removal step.

In the case where the pressurization step is performed before the removal step, the member (for example, the mask layer or the cover layer) used in the removal step may be pressurized together with the electrode composition.

The electrode material for a lithium ion battery obtained by the above procedure may be further subjected to a step of cutting at the electrode composition layer non-arrangement portion to obtain an electrode material for a lithium ion battery having a desired dimension.

In the electrode material for a lithium ion battery manufactured by the method of manufacturing the electrode material for a lithium ion battery, when the plurality of electrode composition layer arrangement portions are separated for use as an electrode of a lithium ion battery, the base material is cut without cutting the electrode composition layer without cutting at the electrode composition layer non-arrangement portion and thus a plurality of electrode composition layers can be obtained. Therefore, no cracks or defects are generated in the electrode composition layer. At this time, the electrode material for a lithium ion battery obtained by cutting may have a plurality of electrode composition layer arrangement portions, or may have a single electrode composition layer arrangement portion.

Therefore, even in the case where the fluidity of the electrode composition is low, it is possible to manufacture an electrode material for a lithium ion battery for manufacturing a lithium ion battery having sufficient durability.

In the case where the base material is a current collector, the electrode material for the lithium ion batteries itself becomes the electrode for the lithium ion battery.

The method of cutting the base material in the electrode composition layer non-arrangement portion is not particularly limited, and examples thereof include known cutting methods (rotary cutting blade, guillotine blade, Thomson type, laser cutting, and the like).

In the method of manufacturing the electrode material for a lithium ion battery, the electrode composition is preferably a wet powder containing an electrode active material and an electrolytic solution.

It is more desirable that the wet powder is in a pendular state or a funicular state.

The ratio of the electrolytic solution in the wet powder is not particularly limited, but in the case of the positive electrode, the ratio of the electrolytic solution is preferably 0.5% to 15% by weight, more preferably 0.5% to 5% by weight, and even more preferably 0.5% to 3% by weight with respect to the total amount of the wet powder. In the case of the negative electrode, the ratio of the electrolytic solution is preferably 0.5% to 25% by weight, more preferably 0.5% to 10% by weight, and even more preferably 0.5% to 5% by weight with respect to the total amount of the wet powder.

As the method of manufacturing a lithium ion battery from the electrode material for a lithium ion battery, for example, a method of preparing a power storage element by laminating a positive electrode material for a lithium ion battery manufactured using a positive electrode active material as an electrode active material, and a negative electrode material for a lithium ion battery manufactured using a negative electrode active material as the electrode active material via a separator so that the electrode composition layers (a positive electrode composition layer and a negative electrode composition layer) face each other, and housing the power storage element in a battery outer container to perform sealing may be used.

As necessary, an electrolytic solution may be added before sealing.

In addition, the positive electrode material for a lithium ion battery and the negative electrode material for a lithium ion battery are laminated so that the electrode composition layers face each other via the separator, and the outer peripheries of the positive electrode current collector and the negative electrode current collector are sealed with a resin having electrolyte solution resistance or the like. Thus, a lithium ion battery can be manufactured without using an outer container.

### [Apparatus for Manufacturing Electrode Material for Lithium Ion Battery]

An apparatus for manufacturing an electrode material for a lithium ion battery is an apparatus for manufacturing an electrode material for a lithium ion battery in which an electrode composition layer arrangement portion in which an electrode composition layer formed of an electrode composition containing an electrode active material is arranged is intermittently arranged on the surface of a continuous sheet-shaped base material, the apparatus including: supply means for continuously supplying the electrode composition onto the base material, pressurizing means for pressurizing the electrode composition supplied onto the base material by the supply means to obtain the electrode composition layer, and removing means for removing a part of the electrode composition supplied onto the base material by the supply means to form an electrode composition layer arrangement portion on the base material.

Examples of the supply means include a known powder quantitative supply apparatus (hopper or the like).

Examples of the removing means include means including cover layer placing means for placing a cover layer on the electrode composition arranged on the base material, and electrode composition removing means for removing the electrode composition in a region in which the cover layer is not provided, and means including mask layer placing means for placing a mask layer having opening portions on the surface of the base material before supplying the electrode composition, and peeling means for peeling off the mask layer after supplying the electrode composition onto the surface of the base material or the mask layer.

Of these, it is preferable to provide mask layer placing means and peeling means.

As preferable pressurizing means, a flat plate press and a roll press may be used.

An example of the apparatus for manufacturing the electrode material for a lithium ion battery will be described with reference to FIG. 14.

FIG. 14 is a cross-sectional view schematically showing an example of an aspect of manufacturing an electrode material for a lithium ion battery using an apparatus for manufacturing an electrode material for a lithium ion battery.

An apparatus 300 for manufacturing an electrode material for a lithium ion battery shown in FIG. 14 includes a hopper 210 as supply means, a mask layer 240 as removing means, a mask layer placing roller 270 and a mask layer peeling roller 280, and a roll presses 260a and 260b as pressurizing means.

The base material 110 is moved in one direction (in the arrow direction) by a base material moving roller 290. First, the mask layer 240 having opening portions A is placed on the base material 110 by the mask layer placing roller 270. After that, the electrode composition 220 is supplied from the hopper 210 onto the base material 110 and the entire surfaces of the opening portions A of the mask layer 240. The thickness of the supplied electrode composition 220 is adjusted by the squeegee 230. Thereafter, the mask layer 240 is peeled off from the surface of the base material 110 by the mask layer peeling roller 280. Finally, the electrode composition 220 remaining on the base material 110 is pressurized by the roll presses 260a and 260b, which are pressurizing means, to form the electrode composition layer 120 on the base material 110. Thus, the electrode material for a lithium ion battery can be manufactured.

In the apparatus for manufacturing the electrode material for a lithium ion battery, the removing means may also serve as pressurizing means.

An example of the case where the removing means also serves as the pressurizing means will be described with reference to FIG. 15.

FIG. 15 is a cross-sectional view schematically showing another example of the aspect of manufacturing an electrode material for a lithium ion battery using the apparatus for manufacturing the electrode material for a lithium ion battery.

An apparatus 400 for manufacturing an electrode material for a lithium ion battery shown in FIG. 15 includes a hopper 210 as supply means, a mask layer 240 as removing means, a roll press 260b as pressurizing means, and a pressurizing and mask layer peeling roller 295. The pressurizing and mask layer peeling roller 295 also functions as a mask layer peeling roller as a removing means and a roll press as a pressurizing means.

The base material 110 is moved in one direction (in the arrow direction) by a base material moving roller 290. First, the mask layer 240 having opening portions A is placed on the base material 110 by the mask layer placing roller 270. After that, the electrode composition 220 is supplied from the hopper 210 onto the base material 110 and the entire surfaces of the opening portions A of the mask layer 240. The thickness of the supplied electrode composition 220 is adjusted by the squeegee 230. Thereafter, the electrode composition 220 is pressurized by the pressurizing and mask layer peeling roller 295 and the roll press 260b, and the mask layer 240 is peeled off from the surface of the base material 110. By forming the electrode composition layer 120 on the base material 110 by the above steps, the electrode material for a lithium ion battery can be manufactured.

Subsequently, a method of manufacturing an electrode for a lithium ion battery will be described.

Japanese Laid-open Patent Publication No. 2018-181802 discloses a method of compression-molding a mixture containing an aprotic solvent and an electrode active material and not containing a resin binding agent at a temperature lower than the melting point of the aprotic solvent.

Since a solid aprotic solvent is used in the method of manufacturing the electrode described in Japanese Laid-open Patent Publication No. 2018-181802, there is a problem that the aprotic solvent is difficult to be uniformly dispersed in the obtained molded body.

On the other hand, as another method of increasing the electrode strength after pressing, it is conceivable to increase the weight ratio of the polymer material (a binder, an active material coating resin, or the like) contained in the electrode. However, in this case, there is concern that the electric resistance of the electrodes increases and the battery performance is adversely affected.

The method of manufacturing the electrode for a lithium ion battery shown below can improve the electrode strength during the manufacturing step without adversely affecting the battery performance.

### [Method of Manufacturing Electrode for Lithium Ion Battery]

The method of manufacturing the electrode for a lithium ion battery includes a compression molding step of compression-molding an electrode composition containing an aprotic solvent and electrode active material particles, and a cooling step of cooling the compression-molded electrode composition, in which the compression molding step is performed at an environmental temperature equal to or higher than a melting point of the aprotic solvent, and in the cooling step, the compression-molded electrode composition is cooled to a temperature below the melting point of the aprotic solvent.

As the electrode composition used in the method of manufacturing the electrode for a lithium ion battery, the same electrode active material composition as described in the method of manufacturing a lithium ion battery of the present invention can be preferably used. However, the electrolytic solution is not an essential constitution.

### [Compression Molding Step]

In the compression molding step, an electrode composition containing an aprotic solvent and electrode active material particles is compression-molded.

The compression molding step is performed at an environmental temperature equal to or higher than the melting point of the aprotic solvent.

Since the compression molding step is performed at an environmental temperature equal to or higher than the melting point of the aprotic solvent, the aprotic solvent exists in a liquid state. Therefore, a liquid aprotic solvent spreads throughout the entire compression-molded electrode composition (hereinafter, also referred to as a compression molded body), and compression failure is unlikely to occur.

The compression molding can be performed by using an arbitrary pressurizing device such as a hydraulic press device and a pressurizing jig. For example, a compression molded body can be obtained by putting the electrode composition in a cylindrical bottomed container, inserting a round bar-shaped pressurizing jig with a diameter slightly smaller than the inner diameter of the cylinder from above, and compressing the composition with the pressurizing device.

By changing the shape of the pressurizing jig, a compression molded body having an arbitrary shape can be obtained.

Regarding the shape of the compression molded body to be prepared, the thickness is preferably 250 to 2000 µm.

Further, in the case of a cylindrical compression molded body, the diameter is preferably 10 to 70 mm.

In the case where the environmental temperature at which the compression molding step is performed is higher than room temperature, the pressurizing device and/or the pressurizing jig may be heated, as necessary.

As the compression condition other than the environmental temperature in the compression molding step, the pressure applied to the mixture is preferably 10 to 3000 MPa. The pressurization time is preferably 1 to 300 seconds.

At this time, the temperature of the electrode composition to be compressed may be higher than the environmental temperature at which the compression molding step is performed.

The melting point of the aprotic solvent is preferably 0°C to 40°C.

In the present specification, the term "melting point of the solvent" simply means the melting point measured under standard atmospheric pressure.

An aprotic solvent is a solvent that does not have a hydrogen ion donating group (a group having a dissociative hydrogen atom, for example, an amino group, a hydroxyl group, and a thio group), and examples thereof include lactone compounds, cyclic or chain carbonates, chain carboxylic acid esters, cyclic or chain ethers, phosphate esters, nitrile compounds, amide compounds, sulfones and mixtures thereof.

As the aprotic solvent used in the compression molding step, a chain carbonate and a cyclic carbonate are preferable.

Examples of the chain carbonate include dimethyl carbonate (melting point: 3°C).

Examples of the cyclic carbonate include vinylene carbonate (melting point: 20°C) and ethylene carbonate (melting point: 35°C).

Of these, the cyclic carbonate is more preferable, and ethylene carbonate is even more preferable.

In the case of using ethylene carbonate as the aprotic solvent, it is more preferable that the environmental temperature at which the compression molding step is performed is 40°C or higher.

The weight ratio of ethylene carbonate contained in the aprotic solvent is preferably 50% to 100% by weight, and more preferably 100% by weight, based on the weight of the aprotic solvent.

The aprotic solvent may also serve as an electrolytic solution.

In the case where two or more aprotic solvents are contained in the electrode composition, the compression molding step is performed at an environmental temperature equal to or higher than the melting point of the aprotic solvent having the lowest melting point.

The weight ratio of the aprotic solvent contained in the electrode composition is preferably 2% to 30% by weight, and more preferably 5% to 10% by weight, based on the weight of the electrode composition.

In the case where the electrode active material particles contained in the electrode composition are coated electrode active material particles, the weight ratio of the polymer compound for coating contained in the electrode composition is preferably 0.1% to 10% by weight based on the weight of the electrode composition.

When the content of the polymer compound for coating contained in the electrode composition is less than 0.1% by weight based on the weight of the electrode composition, the content of the polymer compound for coating contained in the electrode composition is too small, and the electrode cracks may be deteriorated or the compression characteristics may be deteriorated.

On the other hand, in the case where the content of the polymer compound for coating contained in the electrode composition is more than 10% by weight based on the weight of the electrode composition, the content of the polymer compound for coating contained in the electrode composition is too high, which may increase the electric resistance.

The weight ratio of the electrode active material particles contained in the electrode composition is preferably 70% to 95% by weight based on the weight of the electrode composition.

In the case where the electrode active material particles are coated active material particles, the coating layer constituting the coated active material particles are not included in the weight of the electrode active material particles.

The compression molding step may be performed on the current collector. By arranging the electrode composition on the current collector and performing compression molding, a compression molded body can be obtained on the current collector.

The compression molded body obtained on the current collector can be used together with the current collector as an electrode of a lithium ion battery.

As the current collector, the electrode current collector described in the method of manufacturing a lithium ion battery of the present invention can be preferably used.

In the method of manufacturing the electrode for a lithium ion battery, the weight ratio of the adhesive resin contained in the positive electrode active material composition is preferably 0% to 2% by weight based on the weight of the positive electrode active material composition.

In the method of manufacturing the electrode for a lithium ion battery, the ratio of the total weight of the resin components (the coating material, the electrode binder, and the adhesive resin) contained in the positive electrode active material composition is preferably 0.1% to 10% by weight.

### [Cooling Step]

In the cooling step, the compression-molded electrode composition is cooled to a temperature lower than the melting point of the aprotic solvent.

By the cooling step, the aprotic solvent can be solidified to increase the strength (also referred to as electrode strength) of the compression-molded electrode composition.

Therefore, the amount of the resin added to increase the electrode strength can be reduced, and the battery performance is not adversely affected.

The cooling step is preferably performed in a state in which the compression in the compression molding step is not released.

In the cooling step, the pressurizing device and/or the pressurizing jig used for the compression molding of the electrode composition in the compression molding step may be directly cooled.

As the method of directly cooling the pressurizing device and/or the pressurizing jig, a method in which a cooling tube is arranged in a pressurizing device and/or a pressurizing shaft, and water or a freezing liquid cooled through a refrigerating device is circulated to a cooling tube and the like may be used.

By the above procedure, an electrode for a lithium ion battery can be manufactured.

In the electrode for a lithium ion battery manufactured by the method of manufacturing the electrode for a lithium ion battery, the positive electrode active material particles and the negative electrode active material particles are arranged so as to face each other via the separator, an electrolytic solution for a lithium ion battery is added, and then the laminate is housed in a container of an aluminum laminated film or the like. Thus, a lithium ion battery can be obtained.

### (Reference Examples)

Subsequently, the method of manufacturing the electrode material for a lithium ion battery and the method of manufacturing the electrode for a lithium ion battery will be described in detail with Reference Examples. However, the method of manufacturing the electrode material for a lithium ion battery and the method of manufacturing the electrode for a lithium ion battery are not limited to the following Reference Examples provided that there is no deviation from the scope of the method of manufacturing the electrode material for a lithium ion battery and the method of manufacturing the electrode for a lithium ion battery. Unless otherwise specified, parts mean parts by weight and % means % by weight.

### [Reference Example of Method of Manufacturing Electrode Material for Lithium Ion Battery]

### <Manufacturing Example 1: Manufacture of Adhesive Resin>

5.0 parts of vinyl acetate, 23.7 parts of 2-ethylhexyl acrylate, and 185.5 parts of ethyl acetate were put into a four-necked flask with a stirrer, a thermometer, a reflux condenser, a dropping funnel and a nitrogen gas introduction tube, and the temperature was raised to 75°C. 11.1 parts of vinyl acetate, 21.0 parts of 2-ethylhexyl acrylate, 28.1 parts of 2-hydroxyethyl methacrylate, 11.1 parts of acrylic acid, 0. 200 parts of 2,2'-azobis(2,4-dimethylvaleronitrile) and 0.200 parts of 2,2'-azobis(2-methylbutyronitrile) were mixed. The obtained monomeric liquid mixture was continuously added dropwise over 4 hours with the dropping funnel while blowing nitrogen into the flask to carry out radical polymerization. After completion of the dropping, a solution prepared by dissolving 0.800 parts of 2,2'-azobis(2,4-dimethylvaleronitrile) in 12.4 parts of ethyl acetate was added dropwise using the dropping funnel to start polymerization. The solution was continuously added for 6 to 8 hours after the start of polymerization. Further, the polymerization was continued at the boiling point for 2 hours, and 702.4 parts of ethyl acetate was added to obtain a solution of an adhesive resin having a resin concentration of 10% by weight. Then, the ethyl acetate was removed by putting the solution in a vacuum drier at 100°C for 3 hours. The weight average molecular weight (hereinafter abbreviated as Mw) of the adhesive resin was 420,000.

Mw was determined by gel permeation chromatography measurement under the following conditions.
Apparatus: "HLC-8120GPC" [manufactured by Tosoh Corporation]
Column: "TSKgel GMHXL" (2 pieces), "TSKgel Multipore HXL-M, one connected to each" [both manufactured by Tosoh Corporation]
Sample solution: 0.25% by weight tetrahydrofuran solution
Solution injection volume: 10 µL
Flow rate: 0.6 mL/min
Measurement temperature: 40°C
Detection apparatus: refractive index detector
Reference substance: standard polystyrene [manufactured by Tosoh Corporation]

### <Manufacturing Example 2: Preparation of Electrolytic Solution>

LiN(FSO₂)₂(LiFSl) was dissolved at a ratio of 2 mol/L in a mixed solvent of ethylene carbonate (EC) and propylene carbonate (PC) (volume ratio EC:PC = 1:1) to prepare an electrolytic solution.

### <Manufacturing Example 3: Preparation of Positive Electrode Composition>

Using an all-purpose mixer, high-speed mixer FS25 (manufactured by EarthTechnica), 20 parts of carbon fibers (Donacarbo Milled S-243 (manufactured by Osaka Gas Chemicals Co., Ltd.)), 300 parts of the adhesive resin solution obtained in Manufacturing Example 1, 57 parts of acetylene black (Denka Black (manufactured by Denka Company Limited)), and 875 parts of LiNi_{0.3}Co_{0.15}Al_{0.05}O₂ [manufactured by BASF Toda Battery Materials Co., Ltd., HED NCA-7050, volume average particle diameter: 10 µm] were stirred for 15 minutes under the conditions at room temperature and at 720 rpm. The pressure was reduced to 0.01 MPa while stirring was maintained, temperature was raised to 80°C while stirring and reduced pressure were maintained, and then stirring, reduced pressure, and temperature were maintained for 8 hours to distill off volatile components. The obtained mixture was pulverized to create particles in a Hammer Crusher NH-34S (manufactured by Sansho Industry) fitted with a 300 µm metal mesh, and mixed particles of the positive electrode active material and the adhesive resin were obtained.

### <Manufacturing Example 4: Preparation of Wet Powder of Positive Electrode Composition>

99.0 parts of the mixed particles obtained in Manufacturing Example 3 and 1.0 part of the electrolytic solution prepared in Manufacturing Example 2 were put into a planetary stirring type mixing kneader {Awatori Rentaro [manufactured by Thinky Corporation]} and mixed for 5 minutes at 2000 rpm to prepare a wet powder of a positive electrode composition in which the weight ratio of the electrolytic solution based on the total weight of the positive electrode composition was 1.0% by weight.

### <Reference Example 1>

### (1) Supply Step

A SUS sheet-shaped mask having a thickness of 600 µm, a width of 90 mm, and a length of 227 mm, with two opening portions, each having a width of 42 mm and a length of 57 mm and spaced apart at an interval of 29 mm in the length direction, was arranged on a 100 µm-thick release paper set on an automatic coating machine for applicators [tabletop test coater (model: EGPI-1210) manufactured by Eager Corporation]. Further, 10 g of the wet powder of the positive electrode composition prepared in Manufacturing Example 4 was placed in a mountain shape. Further, a film applicator with a micrometer [manufactured by Eager Corporation] was placed on the mask with a gap interval of 0. The film applicator with a micrometer was translated on the pile of wet powder of the positive electrode composition at a constant movement speed of 20 mm/s, and the surface of the pile was scraped off. After the scraping was performed, in the case where linear scratches were observed on the surface of the electrode composition, the scraping operation was repeated until a surface without scratches was obtained.

### (2) Removal Step

After scraping was performed, the SUS sheet-shaped mask arranged on the release paper was removed to obtain a positive electrode composition layer in which the electrode composition was intermittently arranged on the release paper. The top view dimension of the positive electrode composition layer is 42 mm in width and 57 mm in length, and two positive electrode composition layers are arranged at an interval of 29 mm in the length direction.

### (3) Pressurization Step

Subsequently, the base material on which the positive electrode composition layer was arranged was set in a roll press machine and pressurized under the following conditions to obtain an electrode material (1A) for a lithium ion battery.

The electrode material (1A) for a lithium ion battery discharged from the roll press machine was firmly solidified to the extent that its shape was not broken even when it was placed on a glass plate and moved, and had a smooth surface.

### <Conditions for roll press machine>

- Roll size: 250 mm ϕ × 400 mm
- Roll rotation speed: 0.2m/min
- Interval (gap) between rolls: 100 µm
- Linear pressure: 1 ton/cm

### <Reference Example 2>

### (1) Supply Step

10 g of wet powder of the positive electrode active material composition produced in Manufacturing Example 4 was placed in a mountain shape on a 100 µm-thick release paper set in an automatic coating machine for applicators [Eager Corporation desktop test coater (model: EGPI-1210)]. Further, a film applicator with a micrometer [manufactured by Eager Corporation] was placed on a paper pattern with a gap interval of 600 µm. The film applicator with a micrometer was translated on the pile of wet powder of the positive electrode composition at a constant movement speed of 20 mm/s, and the surface of the pile was scraped off. After the scraping was performed, if linear scratches were observed on the surface, the scraping operation was repeated until a surface without scratches was obtained.

The top view dimension of the electrode composition supplied onto the release paper were 42 mm in width and 150 mm in length.

### (2) Removal Step

After scraping was performed, two rectangular SUS plate-shaped members (cover layers) having a width of 42 mm and a length of 57 mm were placed on the scraped electrode composition at an interval of 29 mm in the length direction. The electrode composition protruding to the outside of the plate-shaped member was removed by suction with a suction machine [clean room dust collector (model: KDC-C01) manufactured by Kotohira Kogyo Co., Ltd.]. After removing the protruding composition by suction, the plate-shaped member was removed, and the electrode composition was intermittently arranged on the release paper.

### (3) Pressurization Step

Pressurization was performed under the same conditions as in Reference Example 1 to obtain an electrode material (1B) for a lithium ion battery.

### <Reference Example 3>

### (1) Supply Step

A SUS sheet-shaped mask having a thickness of 600 µm, a width of 90 mm, and a length of 227 mm, with two opening portions, each having a width of 44 mm and a length of 59 mm and spaced apart at an interval of 19 mm in the length direction, was arranged on a 100 µm-thick release paper set on an automatic coating machine for applicators [tabletop test coater (model: EGPI-1210) manufactured by Eager Corporation]. Further, 10 g of the wet powder of the positive electrode composition prepared in Manufacturing Example 4 was placed in a mountain shape. Further, a film applicator with a micrometer [manufactured by Eager Corporation] was placed on the mask with a gap interval of 0. The film applicator with a micrometer was translated on the pile of wet powder of the positive electrode composition at a constant movement speed of 20 mm/s, and the surface of the pile was scraped off. After the scraping was performed, in the case where linear scratches were observed on the surface of the electrode composition, the scraping operation was repeated until a surface without scratches was obtained.

The electrode composition layer having a width of 50 mm and a length of 67 mm is intermittently arranged on the release paper at an interval of 19 mm in the length direction.

### (2) Removal Step

On the electrode composition arranged on the release paper, two rectangular SUS plate-shaped members (cover layers) having a width of 42 mm and a length of 57 mm were placed on the scraped electrode composition at an interval of 29 mm in the length direction. At this time, the position where the plate-shaped member was arranged was adjusted so that the plate-shaped member did not overlap the mask in the top view. Since the top view dimension of the plate-shaped member is smaller than the top view dimension of the opening portion of the mask, the electrode composition is slightly exposed on the outside of the plate-shaped member and inside the opening portion of the mask.

The electrode composition exposed in the region surrounded by the outside of the plate-shaped member and the opening portion of the mask and the electrode composition present on the upper surface of the mask were removed by suction using a suction device [clean room dust collector (model: KDC-C01) manufactured by Kotohira Kogyo Co., Ltd.]. After removing the protruding composition by suction, the plate-shaped member was removed, and the electrode composition was intermittently arranged on the release paper.

### (3) Pressurization Step

Pressurization was performed under the same conditions as in Reference Example 1 to obtain an electrode material (1C) for a lithium ion battery.

### <Reference Comparative Example 1>

### (1) Supply Step

10 g of wet powder of the positive electrode active material composition produced in Manufacturing Example 4 was placed in a mountain shape on a 100 µm-thick release paper set in an automatic coating machine for applicators [Eager Corporation desktop test coater (model: EGPI-1210)]. Further, a film applicator with a micrometer [manufactured by Eager Corporation] was placed on a paper pattern with a gap interval of 600 µm. The film applicator with a micrometer was translated on the pile of wet powder of the positive electrode composition at a constant movement speed of 20 mm/s, and the surface of the pile was scraped off. After the scraping was performed, if linear scratches were observed on the surface, the scraping operation was repeated until a surface without scratches was obtained.

### (2) Pressurization Step

After scraping, no operation was performed, and pressurization was performed under the same conditions as in Reference Example 1.

### (3) Cutting Step

The pressurized electrode composition layer was cut using a Thomson die together with the base material so that the top view dimension is 42 mm in width and 66 mm in length, and an electrode material for a comparative lithium ion battery (H1A) was obtained.

The electrode materials (1A) to (1C) for lithium ion batteries obtained in Reference Examples 1 to 3 and the comparative electrode material (H1A) for a lithium ion battery obtained in Reference Comparative Example 1 were evaluated based on the following item, and the results were shown in Table 1 together with the manufacturing conditions of the electrode materials for lithium ion batteries.

### <Shape Evaluation of Electrode Material for Lithium Ion Battery>

### (1) Visual Evaluation of External Appearance

The surface of the electrode material for a lithium ion battery was visually observed, and the external appearance was evaluated based on the presence or absence of scratches and cracks on the surface. The results are shown in Table 1.

A case where no scratches or cracks could be confirmed on the surface was evaluated as ∘, a case where scratches or cracks were generated was evaluated as Δ, and a case where collapse or defects were observed in the electrode composition layer was evaluated as x.

### (2) Weight Variation

From each electrode material for a lithium ion battery, the electrode composition layer was punched out at 12 points using a round blade punch (manufactured by Tsukatani Thailand Co., Ltd.) having a diameter ϕ of 7 mm to prepare a sample for variation evaluation. The coefficient of variation was calculated from the average weight and standard deviation obtained by measuring the weight of twelve samples. It can be said that the smaller the coefficient of variation, the less the weight variation of the electrode composition layer, and the higher the uniformity. When the coefficient of variation was less than 2%, the material was evaluated as ⊚ (very excellent uniformity), when the coefficient of variation was within a range of 2% to 5%, the material was evaluated as ∘, and when the coefficient of variation was more than 5%, the material was evaluated as x. The results are shown in Table 1.

The twelve samples were punched in 3 rows × 4 rows at equal intervals in the width direction and the length direction respectively so that the punched places were not biased.

**[Table 1]**

| Electrode material for lithium ion battery | | Reference Example 1 | Reference Example 2 | Reference Example 3 | Reference Comparative Example 1 |
|---|---|---|---|---|---|
| | | 1A | 1B | 1C | H1A |
| Removal step | | Mask layer | Cover layer | Mask layer/cover layer | None |
| Evaluation | External appearance | ∘ | ∘ | ∘ | Δ |
| | Weight variation | ⊚ | ⊚ | ⊚ | × |

From the results of Reference Comparative Example 1, it was found that by cutting the positive electrode composition layer, not only cracks and chips were generated at the end portions of the positive electrode composition layer, but also the weight varied.

On the other hand, from the results of Reference Examples 1 to 3, in the case of using the method of manufacturing the electrode material for a lithium ion battery, since the electrode composition layer is not cut, defects such as cracks and chips at the end portions of the electrode composition layer and variations in weight can be suppressed.

### [Reference Example of Method of Manufacturing Electrode for Lithium Ion Battery]

### <Manufacturing Example 5: Preparation of Polymer Compound for Coating and Solution>

407.9 parts of DMF was put in a four-necked flask equipped with a stirrer, a thermometer, a reflux condenser, a dropping funnel, and a nitrogen gas introduction tube, and the temperature was raised to 75°C. Next, a monomer blend solution obtained by blending 242.8 parts of methacrylic acid, 97.1 parts of methyl methacrylate, 242.8 parts of 2-ethylhexyl methacrylate, and 116.5 parts of DMF, and an initiator solution obtained by dissolving 1.7 parts of 2,2'-azobis(2,4-dimethylvaleronitrile), and 4.7 parts of 2,2'-azobis(2-methylbutyronitrile) in 58.3 parts of DMF was continuously added dropwise over 2 hours with the dropping funnel under stirring while blowing nitrogen into the flask to carry out radical polymerization. After completion of the dropping, the reaction was continued at 75°C for 3 hours. Then, the temperature was raised to 80°C and the reaction was continued for 3 hours to obtain a copolymer solution having a resin concentration of 50%. 789.8 parts of DMF was added thereto to obtain a polymer compound solution for coating having a resin solid content concentration of 30% by weight.

### <Manufacturing Example 6: Preparation of Coated Positive Electrode Active Material Particles>

93.7 parts of positive electrode active material powder (LiNi_{0.8}Co_{0.15}Al_{0.05}O₂ powder, volume average particle diameter: 4 µm) was put into an all-purpose mixer, highspeed mixer FS25 (manufactured by EarthTechnica) and stirred at room temperature and at 720 rpm. In this state, 1 part of the polymer compound solution for coating obtained in Manufacturing Example 5 was added dropwise for 2 minutes and further stirred for 5 minutes.

Then, in the stirred state, 1 part of acetylene black [Denka Black (registered trademark) manufactured by Denka Co., Ltd.], which is a conductive auxiliary agent, was added for 2 minutes while being divided, and stirring was continued for 30 minutes. Then, the pressure was reduced to 0.01 MPa while stirring was maintained, temperature was raised to 140°C while stirring and reduced pressure were maintained, and then stirring, reduced pressure, and temperature were maintained for 8 hours to distill off volatile components. The obtained powder was classified by a sieve having an opening of 212 µm to obtain coated positive electrode active material particles.

### <Reference Example 4>

95 parts of the coated positive electrode active material particles obtained in Manufacturing Example 6 were put into a planetary stirring type mixing kneader {Awatori Rentaro [manufactured by Thinky Corporation]} and mixed for 3 minutes at 2000 rpm, and 16.7 parts of a liquid mixture of ethylene carbonate (EC) and methyl ethyl carbonate (volume ratio = 3:7) was further added thereto and mixed for 3 minutes at 2000 rpm.

Then, the methyl ethyl carbonate was distilled off by drying under reduced pressure at 80°C and -0.1 MPa and a mixture (electrode composition) containing the positive electrode active material particles constituting the coating active material particles, the polymer compound for coating, the conductive auxiliary agent, and ethylene carbonate as the aprotic solvent was obtained. The weight ratio of the aprotic solvent to the electrode composition was 5% by weight based on the weight of the electrode composition.

### [Compression Molding Step]

0.636 g of the electrode composition was weighed, and the mixture was placed in a cylindrical bottomed container and compressed by a pressurizing device to obtain a compression molded body formed into a cylindrical shape (Φ 15 mm) .

The pressurization conditions were such that the pressurization pressure was 100 MPa, the pressurization time was 5 seconds, the room temperature was 20°C, and the pressurizing device and the pressurizing jig were heated to 40°C before use.

### [Cooling Step]

By supplying cooling water to the pressurizing device and the pressurizing jig and cooling the device to room temperature (20°C), an electrode (electrode composition compression molded body) according to Reference Example 4 was obtained.

### [Evaluation of Electrode Crack]

The external appearance of the compression molded body of the obtained electrode composition was visually observed, it was confirmed whether or not cracks were generated, and the evaluation was made according to the following criteria. The results are shown in Table 2.
⊚: There are no cracks or cracks on the surface of the electrode.
∘: There are small cracks on the surface of the electrode.
Δ: There are large cracks on the surface of the electrode, but the shape as an electrode is maintained and there is no problem in practical use.
×: The shape as an electrode cannot be maintained, which causes a practical problem.

### [Measurement of Electrode Strength]

The yield stress of the obtained electrode (Φ 15 mm) was measured using an autograph [manufactured by Shimadzu Corporation] in accordance with ISO 178 (Plastics-Determination of flexural properties), and the electrode strength was evaluated according to the following criteria. The results are shown in Table 2.

First, the electrode (Φ 15 mm) was set on a jig with a distance between fulcrums of 5 mm, the load cell (rated load: 20 N) set in the autograph was lowered toward the electrode at a speed of 1 mm/min, and the yield stress was calculated from the yield point.
∘: The yield stress is 1000 kPa or more.
Δ: The yield stress is 300 kPa or more and less than 1000 kPa.
×: The yield stress is less than 300 kPa.

### [Evaluation of Compression Characteristics]

The electrode thickness of the obtained electrode (Φ 15 mm) was measured with a contact type film thickness meter, the void ratio of the electrode was measured from the external dimensions of the electrode and the weight of the electrode, and the compression characteristics were evaluated according to the following criteria. The results are shown in Table 2.
∘: The porosity is 35% or less, and compression characteristics are good.
Δ: The porosity is more than 35% and 40% or less, and the compression characteristics are poor.
×: The porosity is more than 40%, and the compression characteristics are extremely poor.

### [Evaluation of Battery Resistance]

A half cell was prepared using the obtained electrodes, and the battery resistance was evaluated based on the electric resistance at the time of discharge according to the following criteria. The results are shown in Table 2.
∘: The resistance value of the battery is 16 Ω or less, and the battery resistance is low.
×: The resistance value of the battery is more than 16 Ω, and the battery resistance is high.

### <Reference Example 5>

An electrode (electrode composition compression molded body) and a half cell according to Reference Example 5 were prepared according to the procedure the same as that of Reference Example 4 except that the ratios of the positive electrode active material particles constituting the coated positive electrode active material particles, the polymer compound for coating, the conductive auxiliary agent, and the aprotic solvent were changed as shown in Table 2, and the electrode cracks, the electrode strength, the compression characteristics, and the battery resistance were evaluated. The results are shown in Table 2. The weight of the electrode composition used when preparing the electrode (compression molded body of the electrode composition) was the same as that of Reference Example 4.

### <Reference Comparative Examples 2 to 4>

Electrodes (electrode composition compression molded bodies) and half cells according to Reference Comparative Examples 2 to 4 were prepared according to the procedure the same as that of Reference Example 4 except that the ratios of the positive electrode active material particles constituting the coated positive electrode active material particles, the polymer compound for coating, the conductive auxiliary agent, and the aprotic solvent were changed as shown in Table 2, and the electrode cracks, the electrode strength, the compression characteristics, and the battery resistance were evaluated. The results are shown in Table 2. The weight of the electrode composition used when preparing the electrode (compression molded body of the electrode composition) was the same as that of Reference Example 4.

**[Table 2]**

| | | Reference Example 4 | Reference Example 5 | Reference Comparative Example 2 | Reference Comparative Example 3 | Reference Comparative Example 4 |
|---|---|---|---|---|---|---|
| Positive electrode active material particle | Ratio [% by weight] | 93.7 | 88.7 | 96.5 | 98.7 | 93.7 |
| Polymer compound for coating | Ratio [% by weight] | 0.3 | 0.3 | 2.5 | 0.3 | 0.3 |
| Conductive auxiliary agent | Ratio [% by weight] | 1 | 1 | 1 | 1 | 1 |
| Aprotic solvent | Type | EC | EC | - | - | EC |
| | Ratio weight] | 5.0 | 10.0 | - | - | 5.0 |
| | Melting point [°C] | 35 | 35 | - | - | 35 |
| Compression molding step | Environmental temperature [°C] | 40 | 40 | 20 | 20 | 20 |
| Cooling step | Temperature of electrode composition [°C] | 20 | 20 | - | - | - |
| Characteristics evaluation | Electrode crack | ∘ | ⊚ | ∘ | × | Δ |
| | Electrode | ∘ | ∘ | Δ | × | Δ |
| | strength Compression characteristic | ∘ | ∘ | ∘ | × | Δ |
| | Battery resistance | ∘ | ∘ | × | ∘ | ∘ |

In Reference Examples 4 and 5, the electrodes having high electrode strength and low battery resistance could be manufactured.

In Reference Comparative Example 2, the compression characteristics were good without causing electrode cracks, but the battery resistance increased. It is presumed that this is because the content of the polymer compound for coating is too high.

In Reference Comparative Example 3, the battery resistance was good, but the electrode composition could not maintain the shape of the electrode, and the electrode strength was not sufficient. It is presumed that this is because the content of the polymer compound for coating is lower than that of Reference Comparative Example 1.

In Reference Comparative Example 4, the battery resistance was good, but the electrode strength was not sufficient due to the generation of electrode cracks and the compression characteristics were poor. It is presumed that this is because the environmental temperature at which the compression molding step is performed is lower than the melting point of the aprotic solvent, so that the solid aprotic solvent is not uniformly dispersed in the electrode composition.

From the above results, it can be seen that by using the method of manufacturing an electrode for a lithium ion battery, an electrode for a lithium ion battery having high electrode strength can be obtained without increasing the battery resistance.

### Industrial Applicability

The method of manufacturing a lithium ion battery of the present invention is particularly useful as the method of manufacturing a lithium ion battery used for a mobile phone, a personal computer, a hybrid vehicle, and an electric vehicle.

### Reference Signs List

- 1: Sealing material
- 2: Bottom member
- 3: Electrode active material composition
- 4: Electrode active material layer
- 5: Compressor
- 6: Mask material
- 10: Positive electrode
- 11: Positive electrode current collector
- 12: Positive electrode active material layer
- 20: Negative electrode
- 21: Negative electrode current collector
- 22: Negative electrode active material layer
- 30: Separator
- 40: Supply means
- 50: Recovery means
- 60: Transport means
- 70: Camera
- 100: Lithium ion battery
- 110: Base material
- 120: Electrode composition layer
- 140: Cover layer (removing means)
- 200: Electrode material for lithium ion battery
- 210: Hopper (supply means)
- 220A, 220B, 220: Electrode composition
- 230: Squeegee (supply means)
- 240: Mask layer (removing means)
- 250: Suction device (removing means)
- 260a, 260b: Roll press (pressurizing means)
- 270: Mask layer placing roller (removing means)
- 280: Mask layer peeling roller (removing means)
- 290: Base material moving roller
- 295: Pressurizing and mask layer peeling roller (pressurizing means and removing means)
- 300, 400: Apparatus for manufacturing electrode material for lithium ion battery
- A, A_{1,} A₂, A₃, A₄, A₅, C_{1,} C₂, C₃, C₄, C₅: Opening portion
- B₁, B₂, B₃, B₄, B₅: Region in which electrode composition is arranged

## Claims

1. A method of manufacturing a lithium ion battery having a set of a positive electrode current collector, a positive electrode active material layer, a separator, a negative electrode active material layer, and a negative electrode current collector laminated in this order, and having a configuration in which outer peripheries of the positive electrode active material layer and the negative electrode active material layer are sealed with a sealing material and an electrolytic solution is enclosed, the method comprising:
a step of manufacturing a positive electrode and/or a negative electrode by an electrode manufacturing step including a supply step of preparing a frame-shaped sealing material and a bottom member, and supplying an electrode active material composition containing electrode active material particles and an electrolytic solution to a space surrounded by the sealing material and the bottom member, and
a compression step of compressing the electrode active material composition to form an electrode active material layer.

2. The method of manufacturing a lithium ion battery according to claim 1,
wherein the bottom member is an electrode current collector.

3. The method of manufacturing a lithium ion battery according to claim 1 or 2, further comprising:
a step of manufacturing the positive electrode and the negative electrode by the electrode manufacturing step; and
a combination step of combining the positive electrode, the separator, and the negative electrode,
wherein the supply step, the compression step, and the combination step are continuously performed.

4. The method of manufacturing a lithium ion battery according to claim 1 or 2,
wherein the electrode manufacturing step further includes a transfer step of transferring the electrode active material layer formed in the compression step from the bottom member to an electrode current collector.

5. The method of manufacturing a lithium ion battery according to claim 4, further comprising:
a step of manufacturing the positive electrode and the negative electrode by the electrode manufacturing step, and
a combination step of combining the positive electrode, the separator, and the negative electrode,
wherein the supply step, the compression step, the transfer step, and the combination step are continuously performed.
